# EUROPÄISCHE PATENTSCHRIFT

(11) **EP 1 752 755 B1**
(45) Veröffentlichungstag und Bekanntmachung des Hinweises auf die Patenterteilung: **06.05.2015**
(21) Anmeldenummer: 05107359.1
(22) Anmeldetag: 10.08.2005
(51) Int. Cl.: G01N 1/10, B01L 3/02, G01N 1/00, A61B 5/15

(54) **Probenaufnahme- und-dosiervorrichtung mit integrierten Flüssigkeitskompartimenten**
sampling and dosing device with an integrate container for fluid
appareil d'echantillonage et dosage comprenant un reservoir pour liquides

(43) Veröffentlichungstag der Anmeldung: 14.02.2007
(73) Patentinhaber: Roche Diagnostics GmbH, 68305 Mannheim (DE); F. Hoffmann-La Roche AG, 4070 Basel (CH)
(72) Erfinder: Siljegovic, Vuk Dr., 8932 Mettmenstetten (CH); Burkhardt, Claudius, 6004 Luzern (CH); Burri, Martin, 5618 Bettwil (CH)
(74) Vertreter: Curcio, Mario

(56) Entgegenhaltungen:
- WO-A-96/14017
- WO-A-2005/001487
- US-A- 2 737 812
- US-A- 3 045 494
- US-A1- 2003 171 699

## Beschreibung

### Gebiet der Erfindung:

Die Erfindung betrifft Vorrichtungen zur Aufnahme und Dosierung von Probenflüssigkeiten und analytische Testsysteme zur Bestimmung von Analyten in einer Probenflüssigkeit, welche neben solchen Vorrichtungen zur Aufnahme und Dosierung von Probenflüssigkeiten eine Reaktionsküvette zur Durchführung der zur Bestimmung des Analyten notwendigen Reaktionen aufweisen.

Weiterhin betrifft die Erfindung die Verwendung derartiger analytischer Testsysteme zur Bestimmung von Analyten in einer Probenflüssigkeit und Verfahren zur Bestimmung von Analyten in einer Probenflüssigkeit, in welchen derartige analytische Testsysteme Verwendung finden.

### Stand der Technik:

Die vorliegende Erfindung liegt auf dem Gebiet der Probenentnahme und -dosierung und der Durchführung analytischer Tests zur Bestimmung eines Analyten in einer Probenflüssigkeit. Insbesondere betrifft sie analytische Testvorrichtungen undverfahren, welche für Nachweisverfahren geeignet sind, welche flüssige Reagenzien oder Puffer benötigen oder welche eine Mehrzahl aufeinander folgender Einzelschritte und -reaktionen beinhalten.

Die Bestimmung von Analyten in einer Probenflüssigkeit ist in vielen industriellen und wissenschaftlichen Gebieten, beispielsweise bei umwelt- und lebensmittelanalytischen oder auch medizinischen bzw. diagnostischen Untersuchungen, von großer Bedeutung, so dass in der Vergangenheit eine Vielzahl analytischer Verfahren und Testvorrichtungen entwickelt wurden. Viele Bestimmungsverfahren erfordern eine Mehrzahl von aufeinander folgenden analytischen Reaktionen mit verschiedensten Reagenzien und Reaktionsbedingungen, welche in Form von Verfahrensschritten nacheinander nach einem festgelegten Protokoll durchgeführt werden müssen. Bei der Durchführung derartiger Analyseverfahren sind zumeist eine Vielzahl verschiedener manuell durchzuführender Verfahrensschritte, wie beispielsweise Pipettieren, Mischen, Überführen in andere Reaktionsräume, Inkubationsphasen oder Zentrifugations- oder Separationsschritte, notwendig, welche oft fehleranfällig sind und somit zu verfälschten Analytbestimmungen führen können. Obwohl in der Vergangenheit verschiedene Testsysteme entwickelt wurden, in welchen versucht wurde, solche Verfahrensschritte zu vereinfachen oder zu automatisieren, sind solche Testsysteme häufig immer noch komplex und somit teuer in der Herstellung. Weiterhin benötigen sie zur Durchführung der Analytbestimmung meist speziell ausgebildetes Bedienungspersonal und/oder aufwändige und teuere Laborgeräte. Auch wenn in solchen Systemen oft eine Vielzahl von Verfahrensschritten automatisiert werden konnte, werden speziell die Schritte der Probenentnahme, der Probenvorbereitung und/oder des dosierten Probeneinbringens in das Testsystem meist immer noch manuell durchgeführt und sind somit fehleranfällig. In jüngerer Zeit wurde insbesondere mit mikrofluidischen Testsystemen, wie sie beispielsweise in WO 96/07919 oder EP 1445020 A1 beschrieben sind, versucht, die aufgetragene Probe durch speziell ausgeformte Kanäle und Kammern zu transportieren, so dass sie dort an definierten Stellen mit den Nachweisreagenzien in Kontakt kommt. Hierbei durchläuft die Probenflüssigkeit bzw. der Reaktionsansatz nacheinander eine Mehrzahl von Reaktions-, Inkubations- und/oder Detektionsbereichen, so dass hierdurch eine Abfolge räumlich und/oder zeitlich getrennter Reaktionsschritte ermöglicht wird. Dies erfordert jedoch sehr aufwändig herzustellende und damit teure Vorrichtungen und oft auch zusätzliche Verfahrensschritte wie Verdünnungs- oder Mischschritte, welche zumeist außerhalb der Vorrichtung durchgeführt werden, da solche mikrofluidischen Vorrichtungen aus Fertigungs- und Haltbarkeitsgründen oft nur mit trockenchemischen Reagenzien bestückt werden können. Der Transport der Flüssigkeiten erfolgt in solchen mikrofluidischen Vorrichtungen zumeist mittels kapillarer Kräfte, was wiederum hohe Anforderungen an die Genauigkeit und Gestalt der Kapillarkanäle und damit entsprechend teure und komplexe Herstellungsverfahren zur Folge hat. Ein Flüssigkeitstransport durch extern applizierte Kräfte, wie beispielsweise durch Zentrifugation, Rotation oder auch durch Pumpen, erfordert zumeist weniger hohe Anforderungen an die Testvorrichtung selbst, jedoch sind bei diesen Techniken zusätzliche kostenintensive Apparaturen wie beispielsweise Zentrifugen oder Pumpen notwendig.

EP 1445020 A1 beschreibt ein Testelement zur HbA1c-Bestimmung mittels turbidimetrischer Verfahren unter Verwendung trockenchemischer Reagenzien, welches eine komplexe Kanalstruktur zum Probentransport aufweist und neben der Probenflüssigkeit keine weiteren Flüssigkeiten zur Durchführung der Nachweisreaktionen benötigt. Die Kanäle werden auf dem Testelement von verschieden speziellen Kompartimenten unterbrochen, welche beispielsweise zur Abtrennung zellulärer Bestandteile, zur Erzielung eines bestimmten Verdünnungsverhältnisses, als Reagenzien - und Mischkammern, als Reaktionsräume, als Detektionsküvetten oder als Abfallräume dienen. Solche komplexen Kanalstrukturen stellen sehr hohe Anforderungen an ihre Herstellverfahren, insbesondere bezüglich Genauigkeit und Reproduzierbarkeit.

Falls, wie im Falle von WO 96/07919 beschrieben, auch flüssige Reagenzien- oder Pufferlösungen in diesen mikrofluidischen Vorrichtungen enthalten sein sollen, sind zusätzliche interne Kompartimente, in welchen diese Flüssigkeiten vorgelegt sind, nötig, was wiederum die Systemkomplexität und damit auch die Herstellungskosten deutlich erhöht.

Auch US 3,799,742 beschreibt analytische Testelemente, welche flüssigkeitsgefüllte Kompartimente besitzen. In diesen Kompartimenten können beispielsweise Verdünnungslösungen oder Reagenzienlösungen vorlegt sein. Diese Flüssigkeitskompartimente sind integraler Bestandteil des Testelements und durch eine erste Membran vom Außenbereich und eine zweite Membran von weiteren Kompartimenten oder fluidischen Verbindungskanälen getrennt. Zur Probenapplikation wird durch Durchstoßen der ersten Membran die Probenflüssigkeit in das Flüssigkeitskompartiment eingebracht. Die so verdünnte oder mit Reagenzien versetze Probenflüssigkeit wird nun durch Durchstoßen der zweiten Membran in weitere Reaktions- oder Detektionsräume gebracht, in welchen der Analytnachweis erfolgen kann. In diesen Testelementen kann in der externen Durchstechvorrichtung, welche als ein vom Testelement und den im Testelement integrierten Flüssigkeitskompartimenten getrennt vorliegendes und separat einsetzbares Bauteil ausgebildet ist, optional eine Dosierfunktion verwirklicht sein.

US 5,162,237 beschreibt analytische Testelemente, welche als integralen Bestandteil einen Flüssigkeitsbehälter aufweisen, in welchem Reagenzflüssigkeiten aufbewahrt und nach Öffnung des Flüssigkeitsbehälters in einen Reaktionskanal eingeführt werden. In diesen Reaktionskanal mündet ebenfalls eine Eingabeöffnung zum Einbringen eine Probeneingabevorrichtung in das Testelement, welche auch Dosierfunktionen übernehmen kann. Diese Probeneingabe und -dosiervorrichtung liegt hierbei als separate Vorrichtung vor, welche zur Probeneingabe manuell in die entsprechende Öffnung des Testelements eingesetzt wird. Nach Zusammenfügen der Bestandteile des Testsystems und nach Öffnen des im Testelement integrierten Flüssigkeitsbehälters wird die darin enthaltene Reagenzflüssigkeit in den Reaktionskanal freigesetzt, wodurch diese mit der in der Probeneingabe und -dosiervorrichtung vorliegenden Flüssigkeitsprobe in Kontakt kommt und mit dieser einen Reaktionsansatz bildet. Die Testelemente weisen weiterhin speziell geformte interne Flüssigkeitswege und -kammern auf, in den an bestimmten Stellen trockenchemische Nachweisreagenzien positioniert sind, so dass der Reaktionsansatz durch abgestimmte Rotationsbewegungen und die Formgebung der Flüssigkeitswege mit weiteren Nachweisreagenzien in Kontakt kommt und schließlich auch zu einer Detektionsstelle transportiert wird. Diese Testelemente besitzen somit einen sehr komplexen Aufbau mit mehreren Bauteilen, was eine aufwändige und teure Herstellung zur Folge hat. Weiterhin werden zur Durchführung von Analytbestimmungen mit diesen Testelementen aufwändige externe Instrumente benötigt, welche neben den Detektionsvorrichtungen auch mechanische Vorrichtungen und elektrische Steuerungen zur komplexen Bewegung des Testelements benötigen.

Ein andere Gruppe von analytischen Testsystemen sind trägergebundene Tests wie beispielsweise Testträger oder Teststreifen auf trockenchemischer Basis, wie sie unter anderem in EP 1522343 A1 beschrieben werden. Bei diesen sind Reagenzien, insbesondere spezifische Nachweisreagenzien und Hilfsreagenzien, in entsprechenden Nachweiselementen eines festen Trägers eingebettet oder fixiert. Bei den klassischen Teststreifenformaten liegen alle Reagenzien in trockenchemischer Form auf dem Teststreifen vor, welche erst durch die Probenflüssigkeit in Lösung und damit in einen reaktionsfähigen Zustand gebracht werden. Da nicht alle Reagenzien für eine stabile Lagerung in trockenchemischer Form geeignet sind, ist die Anwendung solcher trockenchemischer Teststreifen auf Nachweisreaktionen beschränkt, in welchen alle Reaktionspartner in trockenchemischer Form gelagert werden können. Auch bei trägergebundenen Tests erfolgt der Probenauftrag zumeist manuell mittels Aufpipettieren eines bestimmten Probenvolumens oder Inkontaktbringen mit einen großen undosierten Volumen der Probenflüssigkeit, beispielsweise einem Bluttropfen undefinierter Größe. Auch eventuelle Verdünnungsschritte müssen bei den meisten Teststreifenformaten vor dem Probenauftrag manuell durchgeführt werden. Versuche, auch flüssige Reagenzien auf Teststreifen zu lagern, führten wiederum zu einer Erhöhung der Komplexität derer Aufbauten und damit zu weniger benutzerfreundlichen und auch teureren Testsystemen.

EP 0863401 B1 beschreibt analytische Testelemente im Teststreifenformat, welche auf einem Träger ein saugfähiges Material mit Probenauftrags- und Nachweiszone und einen flüssigkeitsgefüllten Blister enthalten. Der Träger weist zum Öffnen des Blisters einen speziell geformten, beispielsweise als V-förmige Spitze ausgebildeten Einschnitt innerhalb der Trägerfläche auf, so dass bei einem Biegen des Trägers dort eine Spitze entsteht, mit welcher der Blister geöffnet werden kann. Hiedurch kann die im Blister enthaltene Flüssigkeit austreten und mit dem saugfähigen Material in Kontakt kommen. Die im Blister enthaltene Flüssigkeit kann dabei eine Elutionsflüssigkeit oder auch eine Flüssigkeit sein, welche Reagenzien enthält. Entscheidend für die Funktion dieser Testelemente ist, dass eine bestimmte Menge der Probenflüssigkeit in einem zuvor manuell durchzuführenden Schritt auf das saugfähige Material aufgebracht wird und durch die im Blister enthaltene Flüssigkeit entweder mit dem zum Analytnachweis benötigten Reagenzien versorgt und/oder durch diese zum Nachweisort, welcher sich ebenfalls auf dem Testelement befindet, transportiert wird.

US 2,737,812 beschreibt eine Blutaufnahme- und -mischpipette, die ein integriertes Dosierelement in Form einer Kapillare und eine leere zweiseitig offene Mischkammer enthält, welche durch Anlegen eines Unterdrucks durch die gleiche Dosierkapillare, welche auch zur Dosierung der Blutmenge genutzt wurde, solange mit einer externen Verdünnungsflüssigkeit gefüllt wird, bis eine definierte Gesamtmenge von Blut und Verdünnungsflüssigkeit in der Mischkammer vorliegt.

WO 96/14017 beschreibt eine Kapillaren-Küvetten-Kombination, welche aus zwei Bestandteilen besteht: einer Dosierkapillare (16) zur Aufnahme eines definierten Blutvolumens, welche in einem Kapillarhalter (11) fixiert ist und eine Küvette (10), welche eine bestimmte Menge einer Reagenz- oder Pufferlösung enthält. Diese beiden Bestandteile werden bei Verwendung zusammengeführt und die Kapillare an einen Blutstropfen herangeführt. Nach Aufnahme der Probe wird diese durch eine luftdicht aufgesetzte Verschlusskappe durch Drückerhöhung in die Reaktionsküvette gepresst.

In US 2003/0171699 wird eine Probenentnahmevorrichtung in Form einer "Stechhilfe" mit Spitze (14) und daran angeschlossenem offenen Kapillarkanal (16), welcher von einem Deckel (10b) abgedeckt wird, beschrieben.

US2001/0016360 1 beschreibt eine Vorrichtung, die ein Gehäuse umfasst, wobei das Gehäuse in mindestens zwei Bauteile zerlegt werden kann und ferner zu einem Bauteil zusammenbaubar ist; die einen Probensammler umfasst, der einen absorbierenden Docht oder Schlauch zum Sammeln und Fördern einer Probe umfasst, wobei der Probensammler im Gehäuse enthalten ist; die einen Chromatographiebereich umfasst, der ein Chramatographiemedium mit einer Transit-Zone und einer Einfang-Zone zum Detektieren einer Probe umfasst, wobei der Probensammler über die Transit-Zone mit der Einfang-Zone verbunden ist; und die ein Reagenz-Beförderungssystem umfasst zum Befördern eines flüssigen Reagenzes oberhalb des Probensammlers, das ein absorbierendes Reagenzpad umfasst, wobei das absorbierende Reagenzpad in kapillar-kommunizierendem Kontakt mit dem Probensammler steht und wobei das Reagenz-Beförderungssystem so positioniert ist, dass das flüssige Reagenz durch den Probensammler und in den Chromatographiebereich fließt.

US2002/0001822A1 beschreibt eine Vorrichtung und ein Verfahren wobei ein Sampling-Swab mit einer Proben beladen wird und dann von einer Reagenz-Lösung durch stechen des Swrabs und eines Reagenzgefäss kontaktiert wird.

WO93/12421 beschreibt ein Proben-Prüfsatz mit einem Gehäuse, das eine Reagenzkammer zur Aufnahme eines gewählten Reagens umschließt, wobei das Gehäuse aus einem elastisch verformbaren Werkstoff ausgebildet ist, und einer Abdichteinrichtung an dem Gehäuse, die eine Durchflussöffnung bildet, die aus der Reagenzkammer herausführt, dadurch gekennzeichnet, dass die Abdichteinrichtung weiterhin eine Abbrechspitze an einem Ende der Durchflussöffung aufweist, wobei die Abbrechspitze eine Flüssigkeitsströmung durch die Durchflussöffnung verhindert und bei einer Verformung des Gehäuses von der Abdichteinrichtung abbrechbar ist, um so die Durchflussöffnung zu öffnen.

Die im Stand der Technik beschriebenen Probenaufnahmevorrichtungen und analytischen Testsysteme zeichnen sich durch einen komplexen Aufbau oder die Beschräkung auf trockenchemische Reagenzien aus. Die Herstellung und der Zusammenbau solcher komplexer Testelemente sind jedoch zumeist sehr aufwändig und kostenintensiv. In manchen Fällen werden zur Durchführung der Analytbestimmungen zusätzliche komplexe Instrumente, beispielsweise zur Zentrifugation oder Rotation der Testelemente, benötigt, was die Komplexität des gesamten Analysesystems und dessen Anschaffungskosten und damit auch die Kosten pro durchgeführten Test erhöht.

Aus dem Stand der Technik sind keine Vorrichtungen zur Aufnahme und Dosierung von Probenflüssigkeiten und keine analytischen Testsysteme zur Bestimmung von Analyten in einer Probenflüssigkeit bekannt, welche möglichst einfach und kostengünstig herstellbar sind, möglichst einfach und wenig fehleranfällig zu bedienen sind, nicht auf die Verwendung trockenchemischer Reagenzien beschränkt sind und welche eine exakte Dosierung und/oder Verdünnung der zu untersuchenden Probenflüssigkeit mit Puffer- oder Verdünnungslösungen oder Reagenzienlösungen ermöglichen.

### Aufgabe der Erfindung:

Daher ist es eine Aufgabe der Erfindung, Vorrichtungen zur Aufnahme und Dosierung von Probenflüssigkeiten und analytischen Testssysteme zur Bestimmung von Analyten in einer Probenflüssigkeit bereitzustellen, welche die im Stand der Technik genannten Nachteile der bestehenden Vorrichtungen weitgehend vermeiden.

Aufgabe der Erfindung ist es weiterhin, möglichst einfach herstellbare und handhabbare Vorrichtungen zur Aufnahme und Dosierung von Probenflüssigkeiten bereitzustellen, welche es ermöglichen, die im Dosierelement enthaltene Probenflüssigkeit aus diesem zu entfernen und in ein weiteres Kompartiment zu überführen.

Aufgabe der Erfindung ist es weiterhin, möglichst einfach und fehlerfrei handhabbare Vorrichtungen zur Aufnahme und Dosierung von Probenflüssigkeiten bereitzustellen, welche es weiterhin ermöglichen, die im Dosierelement enthaltene Probenflüssigkeit mit einer Verdünnungslösung oder einer Reagenzienlösung in einem definiertem Verdünnungsverhältnis zu versetzen.

Aufgabe der Erfindung ist es weiterhin, analytische Testsysteme zur Bestimmung von Analyten in einer Probenflüssigkeit bereitzustellen, welche möglichst einfach und kostengünstig herstellbar sind, vom Benutzer möglichst einfach handhabbar sind und eine möglichst exakte Dosierung und eventuelle Verdünnung der Probenflüssigkeit ermöglichen.

Aufgabe der Erfindung ist es weiterhin, eine Kombination analytischer Testsysteme zur Bestimmung von Analyten in einer Probenflüssigkeit bereitzustellen, welche es dem Benutzer erlaubt, aus einer Vielzahl von möglichen Analyten auf einfache und kostengünstige Weise den gewünschten Analyten auszuwählen und zu bestimmen.

Aufgabe der Erfindung ist es weiterhin, analytische Testsysteme und Verfahren zur Bestimmung von Analyten in einer Probenflüssigkeit bereitzustellen, welche eine benutzerfreundliche Durchführung insbesondere mehrstufiger Nachweisverfahren mit möglichst wenigen manuell durchzuführenden Verfahrensschritten und/oder möglichst geringem instrumentellem Aufwand ermöglichen.

Aufgabe der Erfindung ist es weiterhin, analytische Testsysteme und Verfahren zur Bestimmung von Analyten in einer Probenflüssigkeit bereitzustellen, welche nicht auf die Verwendung trockenchemischer Reagenzien beschränkt sind.

### Erfindungsgemäße Lösung:

Die vorliegende Erfindung stellt zur Lösung dieser Aufgaben Probenaufnahme- und dosiervorrichtungen, analytische Testsysteme zur Bestimmung eines Analyten in einer Probenflüssigkeit sowie deren Verwendung zu diesem Zweck und Verfahren zur Bestimmung eines Analyten in einer Probenflüssigkeit bereit, wie sie in den unabhängigen Patentansprüchen genannt sind. Bevorzugte Ausführungsformen sind in den abhängigen Ansprüchen angegeben.

Insbesondere beschreibt die vorliegende Erfindung zur Lösung dieser Aufgaben Probenaufnahme- und dosiervorrichtungen, welche ein Dosierelement zur Aufnahme eines definierten Volumens der Probenflüssigkeit und einen Träger, welcher zumindest ein geschlossenes Flüssigkeitskompartiment enthält, in welchem ein definiertes Volumen einer Flüssigkeit enthalten ist, beinhalten und welche dadurch gekennzeichnet sind, dass das Dosierelement integrierter Bestandteil des Trägers ist und das Flüssigkeitskompartiment auf dem Träger öffenbar ist.

Insbesondere ist das Dosierelement in Form einer Kapillare mit zwei freien Enden ausgebildet, welche ein definiertes Volumen einer Probenflüssigkeit aufnehmen kann, und ist das Flüssigkeitskompartiment durch eine abziehbare flüssigkeits- und gasdichte Folie verschlossen, so dass, das definierte Volume der Flüssigkeit, die im Flüssigkeitskompartiment enthalten ist, nach dem Öffnen dieses Flüssigkeitskompartiments mit dem im Dosierelement des Trägers enthaltenen definierten Volumen der Probenflüssigkeit in Kontakt kommt und sich vermischt.

Durch die erfindungsgemäße Integration eines Dosierelements und zumindest eines öffenbaren Flüssigkeitskompartiments, in welchem ein definiertes Volumen einer Flüssigkeit enthalten ist, in einen gemeinsamen Träger ist es nun erstmals möglich, eine Probenaufnahme- und dosiervorrichtung bereitzustellen, welche die zur Aufnahme, Dosierung und Bereitstellung der zu untersuchenden Probenflüssigkeit benötigten Vorrichtungen und Materialien in einem einzigen Bauteil vereinigt. Hierdurch ist nun insbesondere eine einfache und kostengünstige Herstellung solcher Probenaufnahme- und dosiervorrichtungen im großtechnischen Maßstab möglich. Weiterhin ermöglicht die Integration in ein Bauteil eine einfache Handhabung dieser erfindungsgemäßen Vorrichtungen durch den Benutzer, da sowohl alle zur Aufnahme und Dosierung der Probenflüssigkeit als auch die zur Bereitstellung der so dosierten Probenflüssigkeit für nachfolgende Zwecke benötigten Vorrichtungen und Funktionen vereinigt sind. Solche Vorrichtungen sind insbesondere für einen Einsatz in analytischen Testsystemen geeignet, da hiermit dem Benutzer der erfindungsgemäßen Vorrichtung die Möglichkeit gegeben wird, durch diese eine definiertes Volumen der Probenflüssigkeit aufzunehmen und zur weiteren Analytbestimmung in einem dafür vorgesehenen Kompartiment bereitzustellen. Insbesondere ist es durch die erfindungsgemäße Vorrichtung möglich, die Probenflüssigkeit mit einem definierten Volumen der im Flüssigkeitskompartiment enthaltenen Flüssigkeit zu vermischen und so eine definierte Verdünnung der Probenflüssigkeit und/oder den Zusatz von Reagenzien zu erreichen. Durch die erfindungsgemäße Integration des Dosierelements mit dem Flüssigkeitskompartiment auf einem gemeinsamen Träger können so auf einfache Weise und in wenigen Verfahrensschritten definierte Reaktionsansätze für eine Analytbestimmung bereitgestellt werden, welche die Grundlage einer möglichst exakten und fehlerfreien Analytbestimmung sind. Insbesondere können durch die Verwendung der erfindungsgemäßen Probenaufnahme- und dosiervorrichtungen die ansonsten manuell, beispielsweise durch Pipettieren, durchzuführenden Schritte der Probenaufnahme und - dosierung, der Probenverdünnung und Überführung in ein Reaktionskompartiment weitgehend standardisiert und/oder automatisiert werden, was wiederum die Genauigkeit und Reproduzierbarkeit dieser Schritte und somit auch nachgeschalteter Analytbestimmungen deutlich erhöhen kann.

Die erfindungsgemäßen Probenaufnahme- und dosiervorrichtungen bestehen aus einem Träger, der als integraler Bestandteile zumindest ein Dosierelement und ein Flüssigkeitskompartiment enthält. Die Ausgestaltung des Trägers kann hierbei den speziellen Anforderungen des jeweiligen Verwendungszwecks angepasst werden. So kann der Träger weitere optionale Vorrichtungen aufweisen, welche eine verbesserte Handhabbarkeit der Probenaufnahme- und dosiervorrichtung oder deren Implementierung in ein analytisches Testsystem ermöglichen. Beispielsweise kann der Träger spezielle Griffausformungen oder Markierungen aufweisen oder zur Implementierung in ein analytisches Testsystem spezielle Führungs- oder Befestigungselemente wie Rillen, Nuten oder Rastverbindungen aufweisen. Für den Fall, dass die erfindungsgemäße Vorrichtung automatisiert eingesetzt werden soll, kann der Träger hierzu spezielle Vorrichtungen wie beispielsweise Führungs- oder Rastelemente aufweisen, welche eine instrumentelle Bewegung des Trägers oder einzelner Teile des Trägers, beispielsweise zum Öffnen des Flüssigkeitskompartiments, ermöglichen. Weiterhin kann der Träger optionale Identifikationselemente wie alphanumerische Zeichen, Strich- oder Barcodes, zweidimensionale Codes oder auch RFID-Transponder enthalten. Hierdurch können dem Benutzer oder einer instrumentellen Ausleseeinheit trägerspezifische Daten, beispielsweise über Art und Größe des Dosierelements oder Volumen und Zusammensetzung der im Flüssigkeitskompartiment enthaltenen Flüssigkeit oder Daten wie Ablaufdaten, Lot-Nummern oder Kalibrierinformationen übermittelt werden.

Erfindungsgemäß beinhaltet der Träger zumindest ein geschlossenes Flüssigkeitskompartiment, welches ein definiertes Volumen einer Flüssigkeit enthält und welches öffenbar ist. Das Flüssigkeitskompartiment als Bestandteil des Trägers kann beispielsweise als ein speziell geformter Teilbereich des Trägers selbst ausgebildet sein, beispielsweise als eine Vertiefung eines ansonsten weitgehend planaren Trägers. Diese kann mit einem definierten Volumen einer Flüssigkeit befüllt und anschließend mit einer Deckschicht flüssigkeitsdicht verschlossen werden, so dass ein geschlossenes Flüssigkeitskompartiment auf dem Träger vorliegt. Die Ausgestaltung und Herstellung solcher Vertiefungen auf einem Träger kann, je nach verwendetem Material, hier mit verschiedensten dem Fachmann bekannten Methoden, beispielsweise mittels Spritzgieß- oder Tiefziehverfahren, erfolgen. Die Befüllung solcher Vertiefungen mit einem definierten Volumen einer Flüssigkeit kann beispielsweise dadurch erfolgen, dass die Geometrie der Vertiefung selbst das darin enthaltene Volumen definiert oder dass ein dosiertes Volumen einer Flüssigkeit in die Vertiefung gegeben wird. Um ein geschlossenes Flüssigkeitskompartiment zu erhalten, muss nach dem Befüllen mit der Flüssigkeit diese Vertiefung flüssigkeitsdicht verschlossen werden. Dies kann durch das Aufbringen einer Deckschicht, beispielsweise einer flüssigkeits- und gasdichten Kunststoff- oder Metallfolie, erreicht werden. Weitere Ausführungsformen eines Flüssigkeitskompartiments auf einem Träger sind unter anderem in US 5,272,093 zu finden. Neben solchen direkt in den Träger integrierten Flüssigkeitskompartimenten ist es auch möglich, zunächst geschlossene Flüssigkeitskompartimente, welche ein definiertes Volumen einer Flüssigkeit enthalten, bereitzustellen und diese in einem weiteren Herstellungsschritt, beispielsweise durch Fixieren oder Aufkleben, mit dem Träger zu einem gemeinsamen Bauteil zu vereinigen. Solche Ausführungsformen eines Flüssigkeitskompartiments auf einem Träger sind unter anderem in EP 0863401 zu finden, in welcher Verfahren und mögliche Materialien zur Herstellung flüssigkeitsgefüllter Blister aus kunststoffbeschichteter Aluminiumfolie und deren Kombination mit trockenchemischen Teststreifen beschrieben werden. Neben solchen flüssigkeitsgefüllten Blistern sind weiterhin der Einsatz anderer geschlossener Flüssigkeitskompartimente wie Glas- oder Kunststoffampullen möglich, welche auf dem Träger angebracht werden. Eine erfindungswesentliche Eigenschaft der Flüssigkeitskompartimente ist es, dass diese öffenbar sind, so dass die darin enthaltene Flüssigkeit gezielt freigesetzt werden kann. Das Öffnen des Flüssigkeitskompartiments kann hierbei mit verschiedenen Verfahren und Vorrichtungen erfolgen, welche insbesondere vom Material und Verschlussverfahren des Flüssigkeitskompartiments abhängig sind.

In einer bevorzugten Ausführungsform wird das Flüssigkeitskompartiment durch eine abziehbare oder durchstechbare flüssigkeits- und gasdichte Folie verschlossen. Diese kann dann zum Öffnen des Flüssigkeitskompartiments und Freisetzen der darin enthaltenen Flüssigkeit abgezogen oder durchstochen werden. Beispielsweise kann das Flüssigkeitskompartiment mittels einer aufgeklebten oder aufgeschweißten Deckfolie, beispielsweise einer flüssigkeits- und gasdichten Kunststoff- oder Metallfolie, verschlossen werden, welche im Bereich der Vertiefung des Flüssigkeitskompartiments auf den Träger aufgeklebt oder aufgeschweißt wird. Zum Freisetzen der darin enthaltenen Flüssigkeit kann diese manuell oder auch mit instrumenteller Hilfe abgezogen werden, wie es beispielsweise in US 5,272,093 beschrieben wird. Andere Öffnungsmethoden sind beispielsweise das Durchstoßen der Deckfolie oder auch andere Begrenzungsflächen des Flüssigkeitskompartiments mit einer speziellen Vorrichtung oder Ausgestaltung des Trägers, beispielsweise in Form einer Spitze im Träger. Solche Verfahren sind beispielsweise in EP 0863401 beschrieben.

Ein weiterer erfindungsgemäßer Bestandteil des Trägers ist ein integriertes Dosierelement zur Aufnahme eines definierten Volumens einer Probenflüssigkeit. Die Integration des Dosierelements kann bereits während der Herstellung des Trägers erfolgen oder auch erst in einem späteren Herstellungsschritt. Im erstgenannten Fall kann dies beispielsweise dadurch erfolgen, dass bei im Spritzgießverfahren hergestellten Trägern aus Kunststoff eine Dosierfunktion als speziell geformter Bereich des Trägers, beispielsweise in Form einer Dosierkapillare oder eines Dosierkanals, während des Spitzgießens ausgeformt wird. Im letztgenannten Fall kann dies beispielsweise dadurch erfolgen, dass zunächst ein Dosierelement in Form eines separaten Bauteils bereitgestellt wird, welches in einem nachfolgenden Herstellungsschritt mit dem Träger zusammengeführt wird, beispielsweise auf den Träger geklebt oder in einem Spritzgießverfahren vom Trägermaterial umspritzt wird. Als Dosierelement im Sinne der vorliegenden Anmeldung kann prinzipiell jedes Bauteil angesehen werden, welches dem Speichern und/oder Dosieren definierter Flüssigkeitsvolumina dient. Charakteristisch für diese Bauteile sind deren hierfür ausgelegte geometrische Abmessungen und Strukturen, wie beispielsweise kapillare Kanäle oder Öffnungen mit charakteristischen Abmessungen und Durchmessern, welche ein definiertes Volumen einer Flüssigkeit aufnehmen und zur weiteren Verwendung wieder bereitstellen können. Dosierelemente können auch als Mikrostrukturen verwirklich sein und insbesondere aus Halbleitern, Kunststoffen, Glas, Keramik oder Metallen hergestellt sein.

In einer bevorzugten Ausführungsform der erfindungsgemäßen Vorrichtung ist das Dosierelement in Form einer Kapillare oder eines Kanals ausgebildet. Beispiele für solche Dosierelemente sind aus US 3,799,742 oder US 5,162,237, welche Dosierelemente in Form einer Dosierkapillare oder eines Dosierkanals oder einer Dosierkerbe beschreiben. Als Probenflüssigkeit, welche vom Dosierelement aufgenommen werden kann, können im Rahmen der vorliegende Anmeldung neben unbehandelten Flüssigkeiten, wie beispielsweise unbehandelten Blutproben, auch bereits vorbehandelte Flüssigkeiten, wie beispielsweise mit Anti-Koagulantien oder sonstigen Reagenzien versetzte und/oder verdünnte Blutproben, eingesetzt werden.

In einer weiteren bevorzugten Ausführungsform der erfindungsgemäßen Probenaufnahme- und dosiervorrichtung ist zumindest eine im Flüssigkeitskompartiment enthaltene Flüssigkeit eine Puffer- oder Verdünnungslösung. Dies ist insbesondere dann vorteilhaft, wenn die im Dosierelement aufgenommene Probenflüssigkeit in nachfolgenden Verfahrensschritten zunächst in einem definierten Verdünnungsverhältnis zu verdünnen ist, um später mit dieser verdünnten Probenflüssigkeit analytische Bestimmungen durchzufähren. Hierzu wird ein definiertes Volumen einer Puffer- oder Verdünnungslösung in zumindest einem Flüssigkeitskompartiment des Trägers vorgelegt, welches nach dem Öffnen dieses Flüssigkeitskompartiments mit dem im Dosierelement des Trägers enthaltenen definierten Volumen der Probenflüssigkeit in Kontakt kommt und sich mit diesem in einem definierten Verdünnungsverhaltnis vermischt. So kann beispielsweise ein Verdünnungsverhältnis von 1:200 erzielt werden, indem das Dosierelement des Trägers ein Volumen von 5 µl der Probenflüssigkeit aufnehmen kann und das Flüssigkeitskompartiment des Trägers ein Volumen von 995 µl einer Puffer- oder Verdünnungslösung enthält. Als Puffer- oder Verdünnungslösungen können prinzipiell alle Flüssigkeiten eingesetzt werden, welche mit der Probenflüssigkeit mischbar sind und eine weitgehend homogene Verteilung der Probenflüssigkeit in der entstehenden Verdünnungsmischung gewährleisten. Insbesondere können als Puffer- oder Verdünnungslösungen Wasser oder wässrige Lösungen, welche stabilisierende, anorganische oder organische, Puffersubstanzen und/oder Salze enthalten, eingesetzt werden. Puffer- oder Verdünnungslösungen enthalten in der Regel keine Substanzen, welche mit den Bestandteilen der Probenlösung, insbesondere zu analysierenden Probenbestandteilen, spezifisch wechselwirken oder reagieren. Beispiele hierfür sind physiologische Kochsalzlösung, Ringerlösung oder organische Pufferlösungen wie HEPES (2-[4-(2-Hydroxyethyl)piperazino]ethansulfonsäure) -Puffer.

In einer weiteren bevorzugten Ausführungsform der erfindungsgemäßen Probenaufnahme- und dosiervorrichtung ist zumindest eine im Flüssigkeitskompartiment enthaltene Flüssigkeit eine Reagenzienlösung. Dies ist insbesondere dann vorteilhaft, wenn die Probenflüssigkeit, beispielsweise zur Durchführung von Analytbestimmungen, mit speziellen Reagenzien zu einem Reaktionsansatz zu versetzen ist. Hierzu kann ein definiertes Volumen einer Reagenzienlösung in zumindest einem Flüssigkeitskompartiment des Trägers vorgelegt werden, welches nach dem Öffnen dieses Flüssigkeitskompartiments mit dem im Dosierelement des Trägers enthaltenen definierten Volumen der Probenflüssigkeit in Kontakt kommt und vermischt wird, so dass der zur Analytbestimmung benötigte Reaktionsansatz bereitstellt wird. Die Reagenzienlösung kann hierbei alle oder auch nur einzelne zur Bestimmung eines Analyten in einer Probenflüssigkeit notwendige Reagenzien sowie gegebenenfalls weitere Hilfsstoffe enthalten. Einem auf analytischem Gebiet tätigen Fachmann sind solche analytspezifischen Reagenzien und Hilfsmittel bestens bekannt. Für Analyten, die enzymatisch nachzuweisen sind, können dies beispielsweise Enzyme, Enzymsubstrate oder Indikatoren sein, für immunologische Nachweisverfahren spezifische Bindepartner des Analyten wie Antikörper oder Antigene und für optische oder elektrochemischen Nachweisverfahren beispielsweise Farbstoffe oder elektrochemische Mediatoren.

In weiteren bevorzugten Ausführungsformen der erfindungsgemäßen Probenaufnahme- und dosiervorrichtung sind auf dem Träger mehrere voneinander getrennte Flüssigkeitskompartimente enthalten. In besonders bevorzugten Ausführungsformen sind diese Flüssigkeitskompartimente gleichzeitig oder sequentiell öffenbar. Die Flüssigkeitskompartimente können hierbei identische oder unterschiedliche Flüssigkeiten beinhalten. Ausführungsformen, bei welchen in mehreren Flüssigkeitskompartimenten identische Flüssigkeiten enthalten sind, können beispielsweise dazu eingesetzt werden, die Probenflüssigkeit in mehreren Stufen zu verdünnen. Hierzu kann zunächst ein erstes Flüssigkeitskompartiment, welches ein erstes definiertes Volumen einer Flüssigkeit enthält, geöffnet werden, wodurch die Probenflüssigkeit zunächst mit diesem ersten Flüssigkeitsvolumen verdünnt wird. Stellt man nun fest, dass die Konzentration des Analyten in der Flüssigkeitsprobe noch zu hoch für eine verlässliche Bestimmung ist, kann in einem zweiten Verdünnungsschritt ein zweites Flüssigkeitskompartiment, welches ein zweites definiertes Volumen einer Flüssigkeit enthält, geöffnet werden, wodurch die Flüssigkeitsprobe nochmal verdünnt wird. So können sukzessive Verdünnungen der Flüssigkeitsprobe erzielt werden. Beispielsweise kann mit einer derartigen erfindungsgemäßen Vorrichtung, die ein Dosierelement, welches 10 µl Probenflüssigkeit aufnehmen kann, ein erstes Flüssigkeitskompartiment, welches 90µl einer Flüssigkeit enthält und ein zweites Flüssigkeitskompartiment, welches 900µl einer Flüssigkeit enthält, aufweist, die Probenflüssigkeit durch Öffnen des ersten Flüssigkeitskompartiments zunächst in einem Verhältnis 1:10 und durch zusätzliches Öffnen des zweiten Flüssigkeitskompartiments schließlich in einem Verhältnis 1:100 verdünnt werden. In weiteren Ausführungsformen können die in den Flüssigkeitskompartimenten enthaltenen Flüssigkeiten zumindest teilweise unterschiedlich sein. Solche Ausführungsformen sind insbesondere dann vorteilhaft, wenn der Probenflüssigkeit verschiedene Reagenzien zugesetzt werden sollen. Diese Reagenzien können in nasschemischer Form in den jeweiligen Kompartimenten vorliegen und durch die erfindungsgemäße Vorrichtung nacheinander oder auch gleichzeitig der Probenflüssigkeit durch Öffnen der jeweiligen Flüssigkeitskompartimente zugegeben werden. Ein gleichzeitiges Öffnen mehrerer Flüssigkeitskompartimente ist beispielsweise dann vorteilhaft, wenn der Probenflüssigkeit Reagenzienflüssigkeiten zugesetzt werden sollen, die bei Zusammenlagerung ihrer Inhaltsstoffe unerwünschte Reaktionen untereinander eingehen würden. Durch die erfindungsgemäße Aufteilung der Inhaltsstoffe auf mehrere Flüssigkeitskompartimente können diese einerseits unbeeinflusst voneinander stabil gelagert werden, andererseits aber auch durch gleichzeitiges Öffnen der Flüssigkeitskompartimente gleichzeitig in einem Verfahrensschritt zur Probe gegeben werden. Besonders vorteilhaft sind die Flüssigkeitskompartimente in solchen Ausführungsformen nebeneinander angeordnet und von einer gemeinsamen Deckfolie verschlossen, welche zum gleichzeitigen Öffnen der Flüssigkeitskompartimente in einem einheitlichen Verfahrensschritt nach oben abgezogen wird, so dass alle hiervon verschlossenen Flüssigkeitskompartimente gleichzeitig geöffnet werden. Ein sequentielles Öffnen der Flüssigkeitskompartimente ist dagegen dann besonders vorteilhaft, wenn mehrstufige Nachweisreaktionen zur Analytbestimmung erforderlich sind. Besonders vorteilhaft sind die Flüssigkeitskompartimente in solchen Ausführungsformen übereinander angeordnet und von einer gemeinsamen Deckfolie verschlossen, welche zum sequentiellen Öffnen der Flüssigkeitskompartimente zunächst in einem ersten Schritt um eine bestimmte Strecke nach oben abgezogen wird, so dass zunächst das unten befindliche Flüssigkeitskompartiment geöffnet werden kann und nachfolgend in einem zweiten Schritt um eine weitere Strecke nach oben abgezogen wird, so dass nun auch das weiter oben befindliche Flüssigkeitskompartiment geöffnet werden kann. Analog können auf dem erfindungsgemäßen Testträger noch weitere Flüssigkeitskompartimente enthalten sein, welche noch weitere Reagenzienlösungen für weitere Reaktionsschritte enthalten. Auch eine Kombination eines oder mehrerer Flüssigkeitskompartimente, welche Puffer- oder Verdünnungslösungen enthalten, mit einem oder mehreren Flüssigkeitskompartimenten, welche Reagenzienlösungen enthalten, auf einem erfindungsgemäßen Träger ist möglich.

Ein weiterer Aspekt der vorliegenden Erfindung ist die Bereitstellung von analytischen Testsystemen zur Bestimmung eines Analyten in einer Probenflüssigkeit, welche eine erfindungsgemäße Probenaufnahme- und dosiervorrichtung gemäß den vorherigen Ausführungen und weiterhin eine Reaktionsküvette beinhalten.

Durch die Kombination zumindest einer solchen Probenaufnahme- und dosiervorrichtung mit einer Reaktionsküvette kann erfindungsgemäß ein analytisches Testsystem bereitgestellt werden, welches einfach und kostengünstig herstellbar ist, vom Benutzer einfach und möglichst fehlerfrei handhabbar ist und eine möglichst exakte Dosierung und Verdünnung der Probenflüssigkeit ermöglicht. Weiterhin wird es durch die erfindungsgemäße Verwendung von mindestens zwei verschiedenen Komponenten (Probenaufnahme- und dosiervorrichtung und Reaktionsküvette) in den analytischen Testsystemen eine modulare Verwendung einer für alle zu bestimmenden Analyten einheitlichen Komponente und einer für den jeweiligen Analyten spezifischen Komponente ermöglicht. Hierdurch kann eine Kombination analytischer Testsysteme nach dem Baukastenprinzip bereitgestellt werden, welche es dem Benutzer erlaubt, aus einer Vielzahl von möglichen Analyten auf einfache und kostengünstige Weise den gewünschten Analyten auszuwählen und zu bestimmen. Durch die erfindungsgemäßen analytischen Testsysteme ist es insbesondere möglich, auch mehrstufige Nachweisreaktionen zur Analytbestimmung mit möglichst wenigen manuell durchzuführenden Verfahrensschritten oder möglichst geringem instrumentellem Aufwand durchzuführen, welche insbesondere nicht auf die ausschließliche Verwendung trockenchemischer Reagenzien beschränkt sind. Durch die Kombination zumindest einer erfindungsgemäßen Probenaufnahme- und dosiervorrichtung mit einer Reaktionsküvette wird ein einfach herstell- und handhabbares analytisches Testsystem bereitgestellt, welches alle zum Analytnachweis benötigten Verbrauchsmaterialien und - reagenzien beinhalten kann. Durch die Verwendung eines solchen analytischen Testsystems werden die Verfahrenschritte der Probenaufnahme, -dosierung und ― bereitstellung, der Probenverdünnung und des Zusatzes von Reagenzien zur Probe und die Durchführung der zum Analytnachweis erforderlichen Reaktionen in einem Reaktionsraum ermöglicht.

Der Reaktionsraum des analytischen Testsystems wird erfindungsgemäß durch eine Reaktionsküvette gebildet, in welcher die im Dosierelement aufgenommenen Probenflüssigkeit und eine in einem Flüssigkeitskompartiment des Trägers enthaltenen Flüssigkeit sowie optional weitere Reagenzien zusammengebracht und vermischt werden können. Die Reaktionsküvette dient weiterhin als Reaktionsraum, in welchem zumindest ein Teil der zum Analytnachweis notwendigen Reaktionen durchgeführt werden kann. Die Reaktionsküvette kann in vielen geometrischen Formen ausgebildet sein. Neben den klassischen Küvettenformen wie Rechteck- oder Rund-Küvetten können je nach Ausgestaltung des Trägers oder eingesetzter Nachweismethode die Küvettenformen an diese angepasst werden. Die Reaktionsküvette kann optional weitere Kompartimente enthalten. Diese können weitere Funktionen übernehmen und beispielsweise als Fluidikwege, zur Abtrennung bestimmter Proben- oder Reagenzienbestandteile, zur weiteren Verdünnung des Reaktionsansatzes, als Reagenzien- und Mischkammern oder Reaktionsräume, als Detektionsküvetten oder als Abfallräume dienen. Beispiele solch komplexerer Ausführungsformen sind beispielsweise in EP 1445020, US 4,990,075 oder US 5,162,237 in Form fluidischer Testmodule und -kassetten beschrieben. Auch solche komplexeren Ausführungsformen, welche neben der Zusammenführung dosierter Mengen von Probenflüssigkeit und einer weiteren Flüssigkeit und der Durchführung zumindest eines Teils der Nachweisreaktionen noch weitere Funktionen übernehmen, gelten im Rahmen der vorliegenden Anmeldung als Reaktionsküvetten. Die Reaktionsküvetten können hierbei prinzipiell aus jedem Material bestehen, welches die Durchführung der zur Analytbestimmung notwendigen Reaktionen nicht wesentlich nachteilig beeinflusst, etwa durch Bindung des Analyten oder Wechselwirkung mit beteiligten Nachweisreagenzien oder Lösungsmitteln. Im Falle optischer Detektionsmethoden eigen sich insbesondere transparente Reaktionsküvetten oder Reaktionsküvetten, welche zumindest einen transparenten Teilbereich zur Detektion des Analyten besitzen. Solche Küvetten können insbesondere aus Glas oder transparenten Kunststoffen bestehen. Werden zur Detektion des Analyten beispielsweise elektrochemische Nachweisverfahren eingesetzt, kann die Reaktionsküvette vorteilhafterweise aus isolierenden Materialien wie Kunststoff oder auch Glas bestehen. Die Ausgestaltung der Reaktionsküvette kann ähnlich wie die des Trägers den speziellen Anforderungen des jeweiligen Verwendungszwecks angepasst werden und beispielsweise optionale Vorrichtungen aufweisen, welche die Handhabbarkeit der Reaktionsküvette oder deren Zusammenwirken mit anderen Komponenten, beispielsweise dem Träger, verbessern. Insbesondere kann die Reaktionsküvette zur Aufnahme und Fixierung des Trägers spezielle Führungs- oder Befestigungselemente wie Rillen, Nuten oder Rastverbindungen aufweisen. Für den Fall, dass erfindungsgemäße Testsystem auch automatisiert eingesetzt werden soll, kann die Reaktionsküvette auch hierzu spezielle Vorrichtungen wie beispielsweise Führungs- oder Befestigungselemente aufweisen, welche eine instrumentelle Erfassung und Bewegung der Reaktionsküvette und damit des gesamten erfindungsgemäßen analytischen Systems, beispielsweise durch einen Analysator, ermöglichen. Weiterhin kann auch die Reaktionsküvette analog zum Träger Identifikationselemente und/oder spezielle Griffausformungen enthalten.

Zur Durchführung der zum Analytnachweis notwendigen Reaktionen wird zunächst das auf dem Träger integrierte Dosierelement mit der zu untersuchenden Probenflüssigkeit in Kontakt gebracht, so dass eines definiertes Volumens der Probenflüssigkeit ins Dosierelement aufgenommen wird und in diesem verbleibt. In einem nächsten Schritt wird der Träger in die Reaktionsküvette eingebracht, so dass sich das Dosierelement innerhalb der Reaktionsküvette befindet. In einem weiteren Schritt wird nun zumindest ein auf dem Träger befindliches Flüssigkeitskompartiment geöffnet, so dass die in diesem Flüssigkeitskompartiment enthaltene Flüssigkeit in die Reaktionsküvette fließt. Die Menge dieser Flüssigkeit ist so bemessen, dass die Flüssigkeit mit der im Dosierelement enthaltenen Probenflüssigkeit in Kontakt kommt. Hierdurch wird die im Dosierelement befindliche Probenflüssigkeit gleichzeitig verdünnt und für die in der Reaktionsküvette erfolgenden Nachweisreaktionen bereitgestellt wird, wie dies beispielsweise auch in US 5,162,237 dargestellt ist. Enthält die im Flüssigkeitskompartiment des Trägers enthaltene Flüssigkeit Reagenzien, werden diese in diesem Verfahrensschritt der Probenflüssigkeit ebenfalls zugesetzt, so dass der zum Starten der Nachweisreaktionen erforderliche Reaktionsansatz gebildet wird. Optional können weitere Verfahrensschritte wie das Zusetzen weiterer für die Bestimmung des Analyten notwendiger Reagenzien und/oder das Durchmischen dieses Reaktionsansatzes durchgeführt werden. In einem abschließenden Schritt wird eine für den Analyten charakteristische Messgröße des Reaktionsansatzes unter Zuhilfenahme einer Detektionsvorrichtung bestimmt, aus deren Größe auf die Konzentration des Analyten in der Probenflüssigkeit geschlossen werden kann.

In einer bevorzugten Ausführungsform enthält das erfindungsgemäße analytische System weiterhin eine Mischvorrichtung. Durch eine Durchmischung der in der Reaktionsküvette befindlichen Flüssigkeiten kann eine möglichst vollständige Freisetzung der im Dosierelement enthaltenen Probenflüssigkeit gewährleistet werden, da die Durchmischung der im Dosierelement enthaltenen Probenflüssigkeit mit der aus dem Flüssigkeitskompartiment des Trägers freigesetzten Flüssigkeit zu einem Reaktionsansatz nicht alleine auf diffusiven Vorgängen basiert und durch die Mischbewegung deutlich beschleunigt wird. Weiterhin wird eine für eine Analytbestimmung vorteilhafte möglichst homogene Verteilung der Probenflüssigkeit und damit des Analyten im Reaktionsansatz erreicht. Die Durchmischung kann dabei durch Bewegung der Reaktionsküvette oder des gesamten analytischen Testsystems erfolgen, beispielsweise durch Schwenken oder Schütteln, wobei dies manuell oder auch mittels instrumenteller Vorrichtungen durchgeführt werden kann. Die Durchmischung kann weiterhin durch spezielle Mischvorrichtungen erfolgen, wie beispielsweise Flügelrührer oder Magnetrührer. In einer besonders bevorzugten Ausführungsform erfolgt die Durchmischung des Reaktionsansatzes mittels Magnetrührern, wobei in der Reaktionsküvette ein Magnetrührstäbchen als Mischvorrichtung vorhanden ist. Dieses kann bereits vor dem Einbringen des Trägers bzw. dem Öffnen des auf dem Träger befindlichen Flüssigkeitskompartiments in der Reaktionsküvette vorliegen, beispielsweise bereits zusammen mit der Reaktionsküvette abgepackt sein. In anderem Ausführungsformen kann ein Magnetrührstäbchen als Mischvorrichtung erst mit oder nach dem Öffnen des auf dem Träger befindlichen Flüssigkeitskompartiments in die Reaktionsküvette gegeben werden. Dies kann bevorzugt dadurch erfolgen, dass ein Magnetrührstäbchen zusammen mit der Flüssigkeit in ein Flüssigkeitskompartiment gegeben wird, welches durch Öffnen des Flüssigkeitskompartiments, beispielsweise durch Abziehen einer Deckfolie, zusammen mit der Flüssigkeit des geöffneten Flüssigkeitskompartiments in die Reaktionsküvette gelangt.

In einer weiteren bevorzugten Ausführungsform enthält das erfindungsgemäße analytische System Vorrichtungen, welche die Bestimmung des Analyten in der Reaktionsküvette ermöglichen. Dies sind im Wesentlichen spezielle Detektionsvorrichtungen in oder Ausgestaltungen der Reaktionsküvette, welche die Bestimmung einer für den Analyten charakteristischen Messgröße ermöglichen. Hierbei müssen jedoch nicht alle zur Bestimmung des Analyten notwendigen Vorrichtungen in der Reaktionsküvette enthalten sein, sondern es reicht aus, dass ein Teil der hierfür notwendigen Vorrichtungen in der Reaktionsküvette vorliegt oder die Reaktionsküvette entsprechend ausgestaltet ist, so dass die Bestimmung einer für den Analyten charakteristischen Messgröße an dem in der Reaktionsküvette vorliegenden Reaktionsansatz erfolgen kann. Erfolgt die Analytbestimmung mittels optischer Verfahren, wie beispielsweise kolorimetrischer, photometrischer, turbidimetrischer, spektralphotometrischer, fluoreszenz- oder lumineszenzoptischer, fluoreszenzpolarisationsoptischer oder auch Infrarot- und Raman-spektroskopischer Verfahren, muss die Reaktionsküvette zumindest in Teilbereichen transparent sein, um die optischen Eigenschaften des Reaktionsansatzes ermitteln zu können. Hierbei kann die gesamte Reaktionsküvette aus transparentem Material bestehen oder es können lediglich bestimmte Teilbereiche der Küvette transparent ausgestaltet sein, beispielsweise in Form von Messfenstern. Auch solche Ausgestaltungen der Reaktionsküvette werden im Rahmen der vorliegenden Anmeldung als Vorrichtungen, welche die Bestimmung des Analyten in der Reaktionsküvette ermöglichen angesehen. Erfolgt die Analytbestimmung mittels elektrochemischer Verfahren, wie beispielsweise potentiometrischer, amperometrischer, coulometrischer oder konduktometrischer Verfahren, muss die Reaktionsküvette entsprechende Elektroden als Detektionsvorrichtungen enthalten, an welchen die elektrochemischen Nachweisreaktionen ablaufen und/oder welche zur Erfassung der elektrochemischen Veränderungen im Reaktionsansatz dienen. Erfolgt die Analytbestimmung mittels anderer Nachweismethoden, können weitere hierfür dem Fachmann bekannte Detektionsvorrichtungen in der Reaktionsküvette enthalten sein. Ein Teil der zur Analytbestimmung notwendige Detektionsvorrichtungen kann auch außerhalb des erfindungsgemäßen Testsystems vorliegen, beispielsweise in Form einer spezieller Detektionseinheit als Bestandteil eines Analysators, in welchen das erfindungsgemäße analytische Testelement zur Durchführung und/oder Auswertung der Analytbestimmung eingesetzt wird. Im Falle optischer Nachweisverfahren kann eine solche Detektionseinheit beispielsweise Lichtquellen, Filter und Lichtdetektoren, im Falle elektrochemischer Nachweisverfahren beispielsweise Anschlüsse zur Kontaktierung der in der Reaktionsküvette befindlichen Elektroden, Spannungsquellen und Messgeräte zur Erfassung der elektrischen Kenngrößen enthalten. Weiterhin können Vorrichtungen zur Weiterverarbeitung der so ermittelten primären Messgrößen in die gewünschten Werte der Analytkonzentrationen sowie Vorrichtungen zur Weitergabe oder Darstellung dieser Werte in einem solchem Analysator enthalten sein.

Durch die erfindungsgemäße Verwendung von mindestens zwei verschiedenen Komponenten (Probenaufnahme- und dosiervorrichtung und Reaktionsküvette) in den analytischen Testsystemen wird eine modulare Verwendung einer für alle zu bestimmenden Analyten einheitlichen Komponente und einer für den jeweiligen Analyten spezifischen Komponente ermöglicht. Durch diese erfindungsgemäße Lösung kann somit ein flexibel einsetzbares modulares Analysesystem für viele unterschiedliche Analyten bereitgestellt werden, welches dennoch kostengünstig herstellbar und einfach handhabbar ist. Weiterhin wird durch die Integration der zur Analytbestimmung benötigten Reagenzien in eine Komponente des erfindungsgemäßen analytischen Testsystems eine einfache und somit wenig fehleranfällige Durchführung verschiedener Analytbestimmungen ermöglicht.

In einer ersten bevorzugten Ausführungsform wird dies dadurch erreicht, dass die zur Bestimmung des Analyten benötigten spezifischen Reagenzien in Form von Reagenzienflüssigkeiten in einem oder mehreren Flüssigkeitskompartimenten auf dem Träger der Probenaufnahme- und dosiervorrichtung enthalten sind. Hierdurch ist die Verwendung einer universalen und für alle Tests einheitlichen Reaktionsküvette möglich, in welche zur jeweiligen Analytbestimmung der jeweilige spezifische Träger mit den entsprechenden spezifischen Reagenzien eingebracht wird. Hiermit wird dem Benutzer die Möglichkeit gegeben, durch Wahl des entsprechenden Trägers schnell und flexibel einen analytspezifischen Test durchzuführen. In einer bevorzugten Ausführungsform sind auf dem Träger mehrere Flüssigkeitskompartimente enthalten, welche unterschiedliche Reagenzienflüssigkeiten enthalten und welche zu unterschiedlichen Zeitpunkten geöffnet werden können, so dass die darin enthaltenen Reagenzienflüssigkeiten zu unterschiedlichen Zeitpunkten dem Reaktionsansatz zugefügt werden und somit sequentielle Nachweisreaktionen durchgeführt werden können. So kann beispielsweise durch Öffnen eines ersten Flüssigkeitskompartiments eine erste Reagenzienlösung in die Reaktionsküvette eingebracht werden, welche dort mit der im Dosierelement enthaltenen Probenflüssigkeit in Kontakt kommt und mit dieser einen Reaktionsansatz bildet, in welchem eine erste Nachweisreaktion stattfindet. Durch Öffnen eines zweiten und evtl. weiterer Flüssigkeitskompartimente kann nun eine zweite und evtl. weitere Reagenzienlösungen in die Reaktionsküvette eingebracht werden und dort mit dem bisherigen Reaktionsansatz vermischt werden. Hierdurch werden die in diesen Reagenzienflüssigkeiten enthaltenen Reagenzien dem Reaktionsansatz zugesetzt, so dass nun eine zweite und evtl. weitere Nachweisreaktionen stattfinden können. Hierdurch wird auf einfache und wenig fehleranfällige Weise eine benutzerfreundliche Durchführung von Analytbestimmungen mit sequentiellen Nachweisreaktionen ermöglicht. In weiteren Ausführungsformen kann zunächst die Bereitstellung der im Dosierelement enthaltenen Probenflüssigkeit durch Öffnen eines Flüssigkeitskompartiments auf dem Träger erfolgen, welche eine Puffer- oder Verdünnungslösung ohne analytspezifische Reagenzien enthält. In dieser Ausführungsform erfolgt der Zusatz der zur Analytbestimmung benötigten Reagenzien durch nachfolgendes Öffnen eines oder mehrerer Flüssigkeitskompartimenten auf dem Träger, welche Reagenzienlösungen mit den benötigten Reagenzien enthalten. Das Öffnen der unterschiedlichen Flüssigkeitskompartimente kann durch den Benutzer erfolgen, welcher beispielsweise zu bestimmten Zeitpunkten die jeweiligen Flüssigkeitskompartimente des Trägers manuell öffnet, so dass definierte Reagenzienzusatzreihenfolgen und Reaktionszeiten eingehalten werden können. In einer bevorzugten Ausführungsform erfolgt das Öffnen der unterschiedlichen Flüssigkeitskompartimente durch eine instrumentelle Vorrichtung mit einer entsprechenden Ansteuerung, welche automatisch zu bestimmten Zeitpunkten die jeweiligen Flüssigkeitskompartimente auf dem Träger öffnet, wodurch auch komplexe sequentielle Nachweisreaktionen definiert und exakt ohne fehleranfällige manuelle Schritte durchgeführt werden können. Dies kann beispielsweise dadurch verwirklicht werden, dass mehrere Flüssigkeitskompartimente auf dem Träger übereinander angeordnet sind und von einer gemeinsamen Deckschicht, beispielsweise einer Siegelfolie, verschlossen sind. Diese kann spezielle Ausformungen enthalten, an welche ein solcher instrumenteller Mechanismus angreifen kann. Dies können beispielsweise spezielle Laschen der Siegelfolie, welche durch einen solchen Mechanismus erfasst und festgehalten werden können. Zum sequentiellen Öffnen der Flüssigkeitskompartimente kann nun beispielsweise diese Deckschicht durch entsprechende Ansteuerung des instrumentellen Mechanismus stufenweise um eine bestimmte Wegstrecke nach oben abgezogen werden, so dass durch die zunächst das zu unterst liegende Flüssigkeitskompartiment und dann sukzessive die darüber liegenden Flüssigkeitskompartimente geöffnet werden können. Ein solcher ansteuerbarer instrumenteller Mechanismus zum Öffnen der Flüssigkeitskompartimente auf dem Träger kann Bestandteil eines Analysengeräts sein, in welches das erfindungsgemäße analytische Testsystem zur Durchführung der Analytbestimmung eingesetzt werden kann.

In einer zweiten bevorzugten Ausführungsform wird dies dadurch erreicht, dass die zur Bestimmung des Analyten benötigten spezifischen Reagenzien in der Reaktionsküvette enthalten sind. Hierdurch ist die Verwendung einer universalen und für alle Tests einheitlichen Probenaufnahme- und dosiervorrichtung möglich, welche zur Bereitstellung und Verdünnung der Probenflüssigkeit in die Reaktionsküvette ein oder mehrere Flüssigkeitskompartimente aufweist, welche eine universale Puffer- oder Verdünnungslösung enthalten. Durch die Verwendung einer solchen universalen Puffer- oder Verdünnungslösung, welche keine analytspezifischen Reagenzien enthält, kann eine einzige Ausführungsform der Probenaufnahme- und dosiervorrichtungen für viele unterschiedliche Analytbestimmungen eingesetzt werden, da die Spezifität der Analytbestimmung durch die jeweiligen spezifischen Reaktionsküvetten mit den entsprechenden Reagenzien eingebracht wird. Hiermit wird dem Benutzer die Möglichkeit gegeben, durch Wahl der entsprechenden Reaktionsküvette schnell und flexibel einen analytspezifischen Test durchzuführen. Die Reagenzien können hierbei als Flüssigreagenzien in der Reaktionsküvette vorliegen. In einer besonders bevorzugten Ausführungsform liegen die Reagenzien jedoch in trockenchemischer Form in der Reaktionsküvette vor. Die Reagenzien können hierbei in verschiedenen trockenchemischen Formen, beispielsweise als Pulver, in Tablettenform oder in Trägermatrizen wie beispielsweise Papier oder Vliese imprägniert, vorliegen. Die zur Bestimmung des Analyten benötigten spezifischen Reagenzien können dabei in Form eines gemeinsamen Reagenzienspots in der Reaktionsküvette vorliegen oder auf verschiedene Reagenzienspots in der Reaktionsküvette verteilt sein, welche gleichzeitig oder nacheinander vom Reaktionsansatz kontaktiert und damit in reaktive Form gebracht werden können. Eine Verteilung der trockenchemischen Reagenzien auf mehrere Bereiche der Reaktionsküvette mit gleichzeitiger Kontaktierung und Anlösung durch den Reaktionsansatz eignet sich insbesondere beim Einsatz trockenchemischer Reagenzien, welche unerwünschterweise miteinander reagieren können, aber gleichzeitig zum Reaktionsansatz zugesetzt werden sollen. Eine Verteilung der trockenchemischen Reagenzien auf mehrere Bereiche der Reaktionsküvette mit sequentieller Kontaktierung und Anlösung durch den Reaktionsansatz eignet sich insbesondere für Analyseverfahren mit sequentiellen Nachweisreaktionen. So kann beispielsweise der Reaktionsansatz in einer ersten Position des analytischen Testsystems mit einem ersten trockenchemischen Reagenz in Kontakt kommen und reagieren, dann erfolgt durch eine Bewegung des analytischen Testsystems oder weitere Zugabe einer Puffer- oder Verdünnungslösung eine Bewegung des Reaktionsansatzes an eine zweite Position, in welcher der Reaktionsansatz mit einem zweiten trockenchemischen Reagenz in Kontakt kommt und die nächste Stufe der Nachweisreaktion erfolgen kann. Analoges gilt für weitere Reaktionsschritte. Solche Testsysteme sind beispielsweise in US 4,990,075, US 5,162,237 oder US 5,372,948 beschrieben. Die Bewegung des Testsystems erfolgt bevorzugt durch eine externe instrumentelle Vorrichtung, welche beispielsweise Bestandteil eines Analysators ist und durch eine entsprechende Ansteuerung einen exakten Transport des Reaktionsansatzes zu den jeweiligen Reagenzienspots zu definierten Zeiten gewährleistet, wodurch Reaktionsablauf und Inkubationszeiten genau eingehalten werden können. In weiteren Ausführungsformen ist es auch möglich, dass die einzelnen Bereiche der Reaktionsküvette, an denen trockenchemische Reagenzien positioniert sind, übereinander angeordnet sind, so dass zunächst durch Zugabe eines ersten Volumens einer Flüssigkeit durch Öffnen eines ersten Flüssigkeitskompartiments auf dem Träger der unterste Reagenzienspot kontaktiert wird. Durch Zugabe eines zweiten und evtl. weiterer Volumens einer Flüssigkeit durch Öffnen eines zweiten und evtl. weiteren Flüssigkeitskompartiments auf dem Träger kann nun der Flüssigkeitsspiegel des Reaktionsansatzes in der Reaktionsküvette angehoben werden, wodurch nun auch die darüber liegenden Reagenzienspots vom Reaktionsansatz kontaktiert werden können, so dass die darin enthaltenen Reagenzien freigesetzt werden können. In weiteren Ausführungsformen kann ein zumindest zeitweises Ansteigen des Flüssigkeitsspiegels des Reaktionsansatzes und damit die Möglichkeit, weitere Reaktionsspots zu kontaktieren, beispielsweise durch verstärkte Rührbewegungen erreicht werden.

In weiteren Ausführungsformen sind auch Kombinationen der beiden zuvor genannten Ausführungsformen möglich, in welchen beispielsweise die zum Analytnachweis benötigten Reagenzien auf Reagenzienflüssigkeiten, welche in Flüssigkeitskompartimenten auf dem Träger vorliegen, und auf trockenchemische Reagenzien, welche in der Reaktionsküvette vorliegen, aufgeteilt sind.

Ein weiterer Aspekt der vorliegenden Erfindung betrifft die Verwendung eines erfindungsgemäßen analytischen Testsystems zur Bestimmung eines Analyten in einer Probenflüssigkeit mittels sequentieller Nachweisreaktionen, insbesondere zur Bestimmung von Hämoglobin A1c (HbA1c) in einer Blutprobe.

Unter HbA1c versteht man Hämoglobin A, das an den N-terminalen Valinresten der beta-Ketten mit Glucose glykiert vorliegt. Die Bestimmung von Hämoglobin A1c erlaubt eine retrospektive Abschätzung der mittleren Glucosekonzentration der letzten Wochen und damit der Güte der Stoffwechseleinstellung eines Diabetikers. HbA1c wird üblicherweise als Prozentwert des Gesamthämoglobins angegeben, wofür neben dem HbA1c- Gehalt auch die Hämoglobinkonzentration aus der gleichen Blutprobe bestimmt wird. Die Bestimmung von HbA1c wird bisher in den überwiegenden Fällen in großen stationären zentralen Laborgeräten durchgeführt, die in der Handhabung oft komplex und damit fehleranfällig sind bzw. hohe Kosten verursachen. Durch die Verwendung der erfindungsgemäßen analytischen Testsysteme zur HbA1c-Bestimmung ist es nun möglich, solche Tests mit möglichst wenig Anwenderinteraktion und geringem instrumentellen Aufwand kostengünstig durchzuführen. Zur HbA1c-Bestimmung sind mehrere Verfahren bekannt, welche beispielsweise in EP 0989407 oder EP 1445020 beschrieben werden.

Durch die Verwendung der erfindungsgemäßen analytischen Testsysteme ist beispielsweise auf einfache und kostengünstige Weise eine Bestimmung von HbA1c mittels immunologischer Verfahren möglich. Die immunologische Bestimmung von glykiertem Hämoglobin ist unter anderem in Klin. Lab., 39, 991-996 (1993) beschrieben. Bei diesem Verfahren reagiert das HbA1c der Probe in einem ersten Reaktionsschritt mit HbA1c-Antikörpern. Da das HbA1c-spezifische Epitop in jeder beta-Kette des glykiertem Hämoglobins nur einmal vorkommt, kommt es zu keiner Aggregation des Antigen-Antikörperkomplexes. Erst nach Zugabe eines Polyhaptens, das mehrere HbA1c-spezifische Epitope hat, reagieren die Moleküle mit den überschüssigen Antikörpern aus der ersten Reaktion und es kommt zur Bildung eines unlöslichen Immunkomplexes. Dieser kann turbidimetrisch gemessen werden. Das turbidimetrische Signal ist umgekehrt proportional zur Konzentration des glykierten Hämoglobins in der Probe. Da dieses Verfahren mehrere Durchführungsschritte beinhaltet, ist, wird es bisher vor allem in spezialisierten Analysenlaboren durchgeführt. Durch die Verwendung des erfindungsgemäßen analytischen Testsystems ist es nun möglich, eine solche Bestimmung nun auf einfache und kostengünstige Weise auch dezentral durchzuführen. Hierzu kann beispielsweise eine Probenaufnahme- und dosiervorrichtung verwendet werden, welche in einem ersten Flüssigkeitskompartiment eine erste Reagenzienlösung enthält, welche einen HbA1c-spezifischen Antikörper und gegebenenfalls weitere Reagenzien wie PEG, Tenside, Puffer und Stabilisatoren enthält. In einem zweiten Flüssigkeitskompartiment ist eine zweite Reagenzienlösung enthalten, welche ein HbA1c-Polyhapten und gegebenenfalls weitere Reagenzien wie PEG, Tenside, Puffer und Stabilisatoren enthält. Optional kann in einem weiteren Flüssigkeitskompartiment ein Hämolysereagenz enthalten sein, welches bei direkter Verwendung einer Blutprobe als Probenflüssigkeit die darin enthaltenen Erythrozyten lysiert und so das darin enthaltenen Hämoglobin zur HbA1c-Bestimmung in den Reaktionsansatz freisetzt. Dieser Hämolyseschritt kann aber auch optional als Probenvorbereitungsschritt außerhalb des erfindungsgemäßen analytischen Testsystems durchgeführt werden.

Im Folgenden ist exemplarisch die Durchführung einer HbA1c-Bestimmung mit einem solchen erfindungsgemäßen analytischen Testsystem beschrieben:

1 µl einer hämolysiertem Blutprobe wird mittels des Dosierelements der erfindungsgemäßen Probenaufnahme- und dosiervorrichtung aufgenommen und dosiert. Die Probenaufnahme- und dosiervorrichtung wird nun zur Durchführung der Nachweiseraktionen in eine Reaktionsküvette eingebracht und das erste Flüssigkeitskompartiment des Trägers wird geöffnet, welches 250 µl einer ersten Reagenzienlösung beinhaltet, welche einen HbA1c-spezifischen Antikörper enthält. Hierdurch gelangt die darin enthaltene erste Reagenzienlösung in die Reaktionsküvette und kommt mit der Probenflüssigkeit im Dosierelement in Kontakt, wodurch die Probenflüssigkeit aus dem Dosierelement in die Reaktionsküvette bereitgestellt wird. In diesem Reaktionsansatz findet nun als erste Nachweisereaktion eine immunologische Reaktion zwischen dem HbA1c der Probenflüssigkeit und dem HbA1c-spezifischen Antikörper der Reagenzienlösung statt, in welcher die vorhandenen HbA1c-Moleküle an die Antikörper binden. Durch Öffnen des zweiten Flüssigkeitskompartiments des Trägers, welches 50 µl einer zweiten Reagenzienlösung beinhaltet, welche ein Polyhapten mit mehreren HbA1c-spezifischen Epitopen enthält, gelangt die zweite Reagenzienlösung in die Reaktionsküvette und kommt mit dem Reaktionsansatz in Kontakt. Hierdurch kommt es nun zu einer zweiten Nachweisreaktion, in welcher die HbA1c-spezifischen Epitope des Polyhaptens mit den noch nicht besetzten HbA1c-Antikörpern des Reaktionsansatzes binden. Hierdurch kommt es zur Bildung unlöslicher Immunkomplexe, welche in einem optisch transparenten und geometrischen definierten Bereich der Reaktionsküvette, welcher zur optischen Detektion geeignet und beispielsweise als Detektionsfenster ausgebildet ist, durch turbidimetrische Messungen bei einer geeigneten Wellenlänge, beispielsweise bei 340 nm, bestimmt werden. Diese so bestimmte charakteristische optische Messgröße ist ein Maß für die Konzentration der Immunkomplexe im Reaktionsansatz. Diese wiederum steht in reziproker Beziehung zur Menge von HbA1c in der Blutprobe, da nur die nicht von HbA1c belegten Bindungsstellen des Antikörpers im zweiten Reaktionsschritt mit dem Polyhapten reagieren können. Somit kann durch die turbidimetrische Bestimmung der Immunkomplexe bei bekannten Volumen der an der Reaktion beteiligten Flüssigkeiten die Konzentration von HbA1c in der Blutprobe bestimmt werden. Optional kann der HbA1c-Wert auf die Gesamt-Hämoglobin-Konzentration bezogen werden und in Form des prozentualen Anteils des HbA1c am Gesamthämoglobin dargestellt werden. In besonders bevorzugten Ausführungsformen werden durch eine Mischvorrichtung in der Reaktionsküvette eine raschere Bereitstellung der Probenflüssigkeit und eine bessere Durchmischung des Reaktionsansatzes sowie zuverlässigere turbidimetrische Messungen ermöglicht.

Ein weiterer Aspekt der vorliegenden Erfindung betrifft Verfahren zur Bestimmung eines Analyten in einer Probenflüssigkeit mit einem erfindungsgemäßen analytischen Testsystem. Diese Verfahren beinhalten die Schritte
a) Inkontaktbringen des Dosierelements mit der zu untersuchenden Probenflüssigkeit, so dass ein definiertes Volumens der Probenflüssigkeit im Dosierelement verbleibt,
b) Einbringen der Probenaufnahme- und dosiervorrichtung in die Reaktionsküvette,
c) Öffnen zumindest eines Flüssigkeitskompartiments auf dem Träger, so dass die in diesem Flüssigkeitskompartiment enthaltene Flüssigkeit in die Reaktionsküvette fließt und dort in einer Weise mit der im Dosierelement enthaltenen Probenflüssigkeit in Kontakt kommt, dass die Probenflüssigkeit aus dem Dosierelement in die Reaktionsküvette bereitgestellt und ein Reaktionsansatz gebildet wird,
d) optional Zusetzen weiterer für die Bestimmung des Analyten notwendiger Reagenzien und/oder Durchmischen des Reaktionsansatzes,
e) Bestimmen des Analyten anhand einer für den Analyten charakteristischen Messgröße, insbesondere mittels optischer Detektionsverfahren.

Die Erfindung wird durch die nachfolgenden Beispiele und Figuren näher erläutert.
Figur 1 zeigt die Ansicht einer exemplarischen Ausführungsform einer erfindungsgemäßen Probenaufnahme- und dosiervorrichtung, welche ein Flüssigkeitskompartiment aufweist.
Figur 2 zeigt die Ansicht einer exemplarischen Ausführungsform einer erfindungsgemäßen Probenaufnahme- und dosiervorrichtung, welche zwei Flüssigkeitskompartimente aufweist.
Figur 3 zeigt die Ansicht einer weiteren exemplarischen Ausführungsform einer erfindungsgemäßen Probenaufnahme- und dosiervorrichtung, welche zwei Flüssigkeitskompartimente aufweist.
Figur 4 zeigt die Ansicht einer exemplarischen Ausführungsform eines erfindungsgemäßen analytischen Testsystems, welches eine Probenaufnahme- und dosiervorrichtung, welche ein Flüssigkeitskompartiment aufweist, und eine Reaktionsküvette beinhaltet.
Figur 5 zeigt die Ansicht einer exemplarischen Ausführungsform eines erfindungsgemäßen analytischen Testsystems, welches eine Probenaufnahme- und dosiervorrichtung, welche zwei Flüssigkeitskompartimente aufweist, und eine Reaktionsküvette beinhaltet.
Figur 6 zeigt die Ansicht einer weiteren exemplarischen Ausführungsform eines erfindungsgemäßen analytischen Testsystems, welches eine Probenaufnahme- und dosiervorrichtung, welche zwei Flüssigkeitskompartimente aufweist, und eine Reaktionsküvette beinhaltet.
Figur 7 zeigt die Ansichten eines erfindungsgemäßen analytischen Testsystems gemäß Figur 6 zu verschiedenen Verfahrensschritten bei der Durchführung einer Analytbestimmung.

Zum besseren Verständnis der Zeichnungen kann folgende Bezugszeichenliste herangezogen werden:

| | |
|---|---|
| 1 | Probenaufnahme und -dosiervorrichtung |
| 2 | Reaktionsküvette |
| 3 | analytisches Testsystem |
| 4 | Folie |
| 5 | erstes Flüssigkeitskompartiment |
| 6 | zweites Flüssigkeitskompartiment |
| 7 | Träger |
| 8 | Dosierelement |
| 9 | Detektionsvorrichtung |
| 10 | Probenaufnahme und -dosiervorrichtung |
| 11 | Reaktionsküvette |
| 12 | analytisches Testsystem |
| 13 | Folie |
| 14 | Flüssigkeitskompartiment |
| 15 | Träger |
| 16 | Dosierelement |
| 17 | zweites trockenchemisches Reagenz |
| 18 | Detektionsvorrichtung |
| 19 | erstes trockenchemisches Reagenz |
| 20 | Reaktionsküvette |
| 21 | Erstes Trägerteil |
| 22 | Zweites Trägerteil |
| 23 | Probenaufnahme und -dosiervorrichtung |
| 24 | Detektionsvorrichtung |
| 25 | Aussparung |
| 26 | Erstes Flüssigkeitskompartiment |
| 27 | Erstes Flüssigkeitskompartiment |
| 28 | Dosierelement |
| 29 | Folie |
| 30 | analytisches Testsystem |

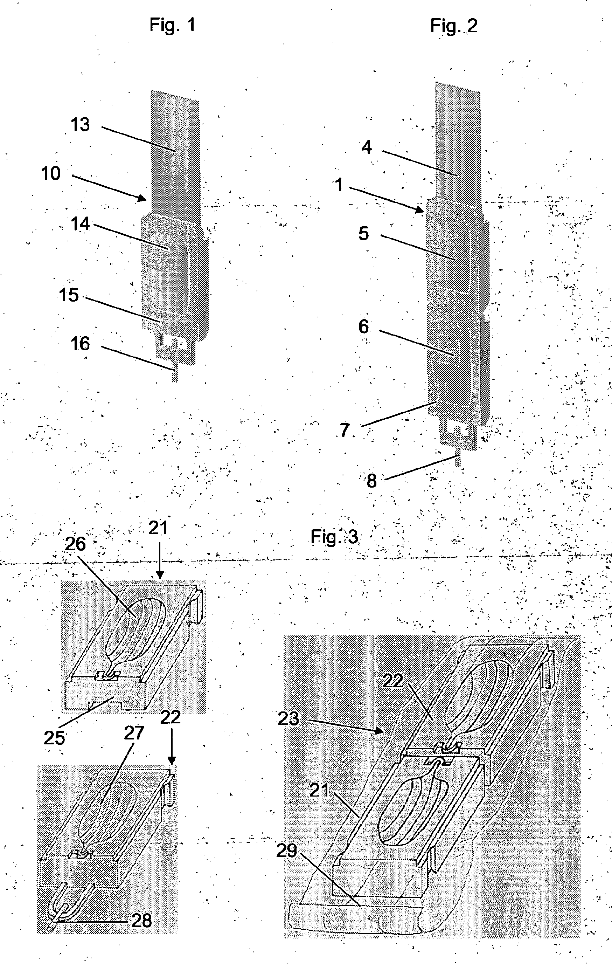

Figur 1 zeigt die Ansicht einer exemplarischen Ausführungsform einer erfindungsgemäßen Probenaufnahme- und dosiervorrichtung (10), welche ein Flüssigkeitskompartiment (14) aufweist. Die Probenaufnahme- und dosiervorrichtung (10) besteht aus einem Träger (15), welcher ein Flüssigkeitskompartiment (14) aufweist, welches hier in Form einer Vertiefung des Trägers (15) ausgebildet ist und ein definiertes Volumen eine Flüssigkeit beinhaltet. Die Vertiefung ist im vorliegenden Fall nach unten flacher werdend ausgebildet, so dass ein vollständiger Ausfluss der darin enthaltenen Flüssigkeit gewährleistet werden kann. Diese Vertiefung des Trägers (15) wird nach Befüllen mit der Flüssigkeit durch eine Folie (13) versiegelt, so dass ein geschlossenes Flüssigkeitskompartiment (14) entsteht. Diese Folie (13) kann nach oben über den Träger (15) hinausragen, so dass diese zum Öffnen des Flüssigkeitskompartiments (14) manuell oder mit instrumentellen Einrichtungen nach oben abgezogen werden kann. Weiterhin ist in den Träger (15) ein Dosierelement (16) integriert, hier in Form einer integrierten Dosierkapillare, welche ein definiertes Volumen einer Probenflüssigkeit aufnehmen kann.

Figur 2 zeigt die Ansicht einer exemplarischen Ausführungsform einer erfindungsgemäßen Probenaufnahme- und dosiervorrichtung (1), welches ein erstes Flüssigkeitskompartiment (5) und ein zweites Flüssigkeitskompartiment (6) aufweist. Die Probenaufnahme- und dosiervorrichtung (1) besteht aus einem Träger (7), auf welchem die Flüssigkeitskompartimente (5) und (6) jeweils in Form einer Vertiefung des Trägers (7) ausgebildet sind und welche jeweils ein definiertes Volumen einer Flüssigkeit beinhalten. Diese Vertiefungen des Trägers (7) werden nach Befüllen mit der jeweiligen Flüssigkeit durch eine gemeinsame Folie (4) versiegelt, so dass zwei geschlossene, von einander getrennt vorliegende Flüssigkeitskompartimente (5) und (6) entstehen. Die Folie (4) kann nach oben über den Träger hinausragen, so dass diese zum Öffnen der Flüssigkeitskompartimente (5) oder (6) manuell oder mit instrumentellen Einrichtungen nach oben abgezogen werden kann. Weiterhin ist in den Träger (7) ein Dosierelement (8) integriert, hier in Form einer integrierten Dosierkapillare, welche ein definiertes Volumen einer Probenflüssigkeit aufnehmen kann.

Figur 3 zeigt die Ansicht einer weiteren Ausführungsform einer erfindungsgemäßen Probenaufnahme- und dosiervorrichtung (23), welche zwei Flüssigkeitskompartimente (26) und (27) aufweist. In dieser Ausführungsform besteht die Probenaufnahme- und dosiervorrichtung (23) aus einem ersten Trägerteil (21) und einem zweiten Trägerteil (22), welche zumindest über eine gemeinsame Folie (29) miteinander verbunden sind.

Die beiden Trägerteile (21) und (22) können als separate Bauteile ausgebildet sein oder auch ohne Folie (29) miteinander verbunden vorliegen. So können die beiden Trägerteile (21) und (22) beispielsweise als ein gemeinsames Spritzgussteil hergestellt werden, bei welchem die beiden Teile zunächst über einen dünnen Steg miteinander verbunden sind. Ein Trägerteil, im dargestellten Fall das zweite Trägerteil (22), weist ein Dosierelement (28) auf, welches in Form einer Dosierkapillare in das zweite Trägerteil (22) integriert ist und welche ein definiertes Volumen einer Probenflüssigkeit aufnehmen kann. Optional kann das andere Trägerteil, im dargestellten Fall das erste Trägerteil (21), eine Aussparung (25) aufweisen, in welchem in zusammengebauten Zustand der Probenaufnahme- und dosiervorrichtung (23) das Dosierelement (28) Platz findet. Weiterhin weist das erste Trägerteil (21) ein erstes Flüssigkeitskompartiment (26) und das zweite Trägerteil (22) ein zweites Flüssigkeitskompartiment (27) jeweils in Form einer Vertiefung auf. Die Vertiefung ist im vorliegenden Fall mit einer flach auslaufenden Ausflusszunge ausgestattet, so dass ein vollständiger Ausfluss der darin enthaltenen Flüssigkeit gewährleistet werden kann. Diese Vertiefungen werden nach Befüllen mit der jeweiligen Flüssigkeit durch eine gemeinsame Folie (29) versiegelt, so dass auf den jeweiligen Trägerteilen (21) und (22) jeweils geschlossene, voneinander getrennt vorliegende Flüssigkeitskompartimente (26) und (27) entstehen. Im dargestellten Beispiel sind die Trägerteile (21) und (22) so angeordnet, dass die Ausflusszungen der beiden Flüssigkeitskompartimente (26) und (27) gegenüber angeordnet sind und das im Trägerteil (22) integrierte Dosierelement (28) in die Aussparung (25) des Trägerteils (21) eingreift. Hierdurch kann durch Zusammenführen der beiden Trägerteile (21) und (22) auf der Seite der gemeinsamen Folie (29) eine Probenaufnahme- und dosiervorrichtung (23) bereitgestellt werden, aus welcher nach unten das Dosierelement (28) herausragt. Die Probenaufnahme- und dosiervorrichtung (23) kann durch hier nicht dargestellte zusätzliche Befestigungselemente in diesem Zustand fixiert werden, beispielsweise durch Rastelemente auf einem oder beiden Trägerteilen oder durch Fixieren mittels Verklebens. Das Öffnen eines Flüssigkeitskompartiments (26) oder (27) kann in diesem Zustand beispielsweise dadurch erfolgen, dass die die beiden Trägerteile (21) und (22) gegeneinander verschoben werden, so dass die Folie (29) zumindest im Bereich der Ausflusszunge eines Flüssigkeitskompartiments abgezogen wird und die darin enthaltene Flüssigkeit freigesetzt werden kann.

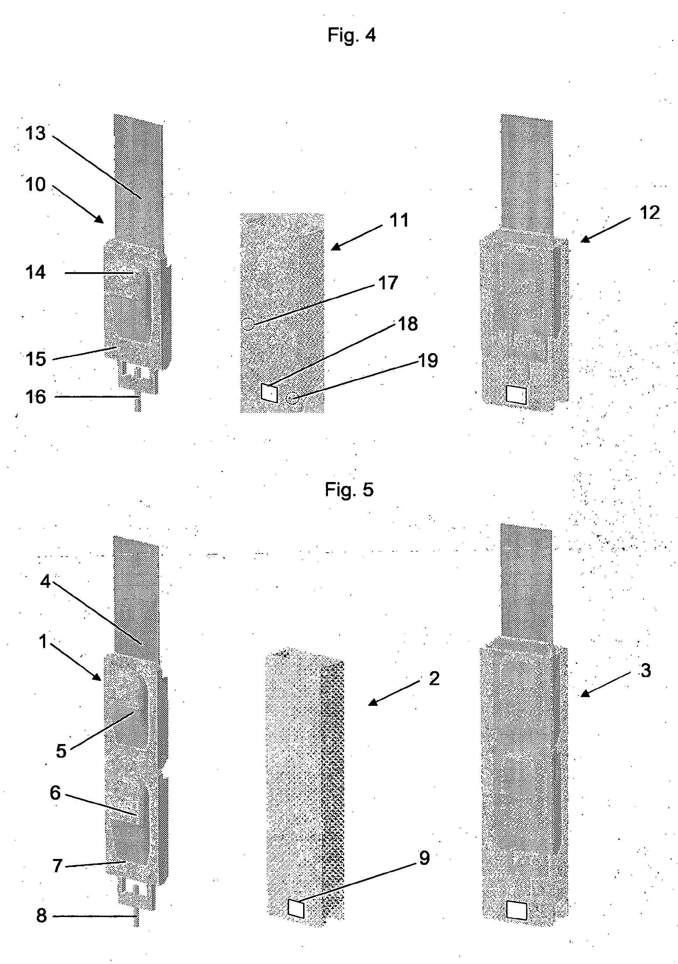

Figur 4 zeigt die Ansicht einer exemplarischen Ausführungsform eines erfindungsgemäßen analytischen Testsystems (12), welches eine Probenaufnahme- und dosiervorrichtung (10) gemäß Figur 1 und eine Reaktionsküvette (11) beinhaltet. Die Reaktionsküvette (11) ist im dargestellten Fall für die Erfassung einer für den Analyten charakteristischen Messgröße mittels optischer Methoden mit einer Detektionsvorrichtung (18) in Form eines transparenten Messfensters ausgestattet. Weiterhin enthält die Reaktionsküvette im Bodenbereich ein erstes trockenchemisches Reagenz (19) und in einem weiter oben befindlichen Bereich ein zweites trockenchemisches Reagenz (17). Diese können mit verschiedenen dem Fachmann bekannten Methoden an diesen Stellen der Wand der Reaktionsküvette (11) fixiert sein, beispielsweise durch Anbringen eines reagenziengetränkten Matrix- oder Vliesmaterials oder durch Aufbringen und anschließendem Eintrocknen einer Reagenzienlösung während des Herstellungsprozesses der Reaktionsküvette. Nachdem die zu untersuchende Probenflüssigkeit, beispielsweise eine Blutprobe, in das Dosierelement (16) der Probenaufnahme und -dosiervorrichtung (12) aufgenommen wurde, können Reaktionsküvette (11) und Probenaufnahme und -dosiervorrichtung 10) nun zur Durchführung der Analytbestimmung zu einem analytischen Testsystem (12) zusammengeführt werden. Hierzu können sowohl die Reaktionsküvette (11) und Probenaufnahme und -dosiervorrichtung (10) optional spezielle Führungs- oder Befestigungselemente wie Rillen, Nuten oder Rastverbindungen aufweisen, welche das Zusammenfügen der beiden Teile erleichtern und/oder die beiden Teile in einer festen räumlichen Lage zueinander fixieren, wodurch sowohl Bedienungsfreundlichkeit und Bedienungssicherheit erhöht werden können. In diesem Zustand, in welchem weder die Probenflüssigkeit noch die im Flüssigkeitskompartiment (14) enthaltene Flüssigkeit in die Reaktionsküvette (11) eingebracht sind, kann nun eine erste optische Messung im Bereich der Detektionsvorrichtung (18), beispielsweise als Nullwertsbestimmung, durchgeführt werden. Durch Abziehen der Folie (13) nach oben wird nun die im Flüssigkeitskompartiment (14) enthaltene Flüssigkeit, beispielsweise eine Pufferlösung, freigesetzt und fließt in die Reaktionsküvette (11). Dort kommt sie nun einerseits mit der im Dosierelement (16) enthaltenen Probenflüssigkeit in Kontakt und vermischt sich mit dieser, wodurch diese zur Analytbestimmung in die Reaktionsküvette bereitgestellt und verdünnt wird. Andererseits kann nun durch die freigesetzte Flüssigkeit das erste trockenchemische Reagenz (19) in Lösung gebracht werden, wodurch sich ein Reaktionsansatz bildet, welcher in seiner Summe aus der Probenflüssigkeit, der zuvor im Flüssigkeitskompartiment (14) enthaltenen Flüssigkeit und den Substanzen des ersten trockenchemischen Reagenzes (19) zusammensetzt ist. Das Abziehen der Folie kann hierbei manuell oder bevorzugt mittels einer instrumentellen Vorrichtung, welche das nach oben überstehende Ende der Folie erfasst und diese mittels einer entsprechenden Steuerung um eine bestimmte Wegstrecke nach oben bewegt, erfolgen. In diesem Reaktionsansatz können nun eine oder auch mehrere Nachweisreaktionen einer mehrstufigen Analytbestimmung ablaufen. Bevorzugt wird der Reaktionsansatz weiterhin durchmischt, beispielsweise mittels eines in der Küvette befindlichen Magnetrührstäbchens. Da zu diesem Zeitpunkt der Reaktionsansatz noch nicht mit dem zweiten trockenchemischen Reagenz (17) in Kontakt kommen soll, ist die Position dieses zweiten trockenchemischen Reagenzes (17) in der Reaktionsküvette (11) bezüglich des Flüssigkeitsspiegels des Reaktionsansatzes unter Berücksichtigung der Rührbewegung so zu wählen, dass dieser auch unter schwachen Rührbewegungen unterhalb der Position des zweiten trockenchemischen Reagenzes (17) bleibt. Zu diesem Zeitpunkt kann nun beispielsweise eine zweite optische Messung im Bereich der Detektionsvorrichtung (18), beispielsweise als Referenzwertsbestimmung, durchgeführt werden. In einem nachfolgenden Schritt kann es nun beispielsweise durch Erhöhung der Rührgeschwindigkeit die Flüssigkeitsoberfläche in den Randbereichen nach oben bewegt werden, so dass der Reaktionsansatz nun mit zweiten trockenchemischen Reagenz (19) in Kontakt kommt und dieses damit dem Reaktionsansatz zuführt. Dadurch können nun eine oder auch mehrere weitere Nachweisreaktionen einer mehrstufigen Analytbestimmung ablaufen, welche die im zweiten trockenchemischen Reagenz (19) enthaltenen Substanzen benötigen. Zu diesem Zeitpunkt kann nun beispielsweise eine dritte optische Messung im Bereich der Detektionsvorrichtung (18), beispielsweise als Messwertsbestimmung, durchgeführt werden. Aufgrund der Messwerte der optischen Messungen kann eine für den Analyten charakteristische Messgröße ermittelt werden, auf deren Basis unter Kenntnis weiterer Parameter wie beispielsweise Volumina der beteiligten Flüssigkeiten die Konzentration des Analyten in der Probenflüssigkeit bestimmt werden kann.

Figur 5 zeigt die Ansicht einer exemplarischen Ausführungsform eines erfindungsgemäßen analytischen Testsystems (3), welches eine Probenaufnahme- und dosiervorrichtung (1) gemäß Figur 2 und eine Reaktionsküvette (2) beinhaltet. Die Reaktionsküvette (2) ist im dargestellten Fall für die Erfassung einer für den Analyten charakteristischen Messgröße mittels optischer Methoden mit einer Detektionsvorrichtung (9) in Form eines transparenten Messfensters ausgestattet.

Nachdem die zu untersuchende Probenflüssigkeit, beispielsweise eine Blutprobe, in das Dosierelement (8) der Probenaufnahme und -dosiervorrichtung (1) aufgenommen wurde, können Reaktionsküvette (2) und Probenaufnahme und -dosiervorrichtung (1) zur Durchführung der Analytbestimmung zu einem analytischen Testsystem (3) zusammengeführt werden. In diesem Zustand, in welchem weder die Probenflüssigkeit noch die im Flüssigkeitskompartiment (6) enthaltene Flüssigkeit in die Reaktionsküvette (2) eingebracht sind, kann nun eine erste optische Messung im Bereich der Detektionsvorrichtung (9), beispielsweise als Nullwertsbestimmung, durchgeführt werden. Durch Abziehen der Folie (4) um eine bestimmte Wegstrecke nach oben wird nun die im zweiten Flüssigkeitskompartiment (6) enthaltene Flüssigkeit, beispielsweise eine erste Reagenzienlösung, freigesetzt und fließt in die Reaktionsküvette (2). Dort kommt sie nun einerseits mit der im Dosierelement (8) enthaltenen Probenflüssigkeit in Kontakt, wodurch diese zur Analytbestimmung in die Reaktionsküvette bereitgestellt, verdünnt und mit den in der ersten Reagenzienlösung enthaltenen Substanzen zu einem Reaktionsansatz vermischt wird. In diesem Reaktionsansatz können nun eine oder auch mehrere Nachweisreaktionen einer mehrstufigen Analytbestimmung ablaufen. Bevorzugt wird der Reaktionsansatz weiterhin durchmischt, beispielsweise mittels eines in der Küvette befindlichen Magnetrührstäbchens, wodurch eine gute Durchmischung der Komponenten des Reaktionsansatzes gewährleistet ist. Zu diesem Zeitpunkt kann nun beispielsweise eine zweite optische Messung im Bereich der Detektionsvorrichtung (9), beispielsweise als Referenzwertsbestimmung, durchgeführt werden. In einem nachfolgenden Schritt kann durch weiteres Abziehen der Folie (4) um eine bestimmte Wegstrecke nach oben die im ersten Flüssigkeitskompartiment (5) enthaltene Flüssigkeit, beispielsweise eine zweite Reagenzienlösung, freigesetzt und in die Reaktionsküvette (2) fließen, wodurch die darin enthaltenen Reagenzien dem Reaktionsansatz hinzugefügt werden. Dadurch können nun eine oder auch mehrere weitere Nachweisreaktionen einer mehrstufigen Analytbestimmung ablaufen, welche diese in der zweiten Reagenzienlösung enthaltenen Substanzen benötigen. Zu diesem Zeitpunkt kann nun beispielsweise eine dritte optische Messung im Bereich der Detektionsvorrichtung (9), beispielsweise als Messwertsbestimmung, durchgeführt werden. Aufgrund der Messwerte der optischen Messungen kann eine für den Analyten charakteristische Messgröße ermittelt werden, auf deren Basis unter Kenntnis weiterer Parameter wie beispielsweise Volumina der beteiligten Flüssigkeiten die Konzentration des Analyten in der Probenflüssigkeit bestimmt werden kann. In dieser Ausführungsform kann die Folie (4) bevorzugt in vom unteren zum oberen Bereich hin gefalteter Form vorliegen, um ein kontrolliertes sequentielles Öffnen der einzelnen Flüssigkeitskompartimente zu ermöglichen. Die in Zusammenhang mit Figur 4 beschriebenen weiteren Ausgestaltungen gelten dementsprechend auch für ein analytisches Testsystem gemäß Figur 5.

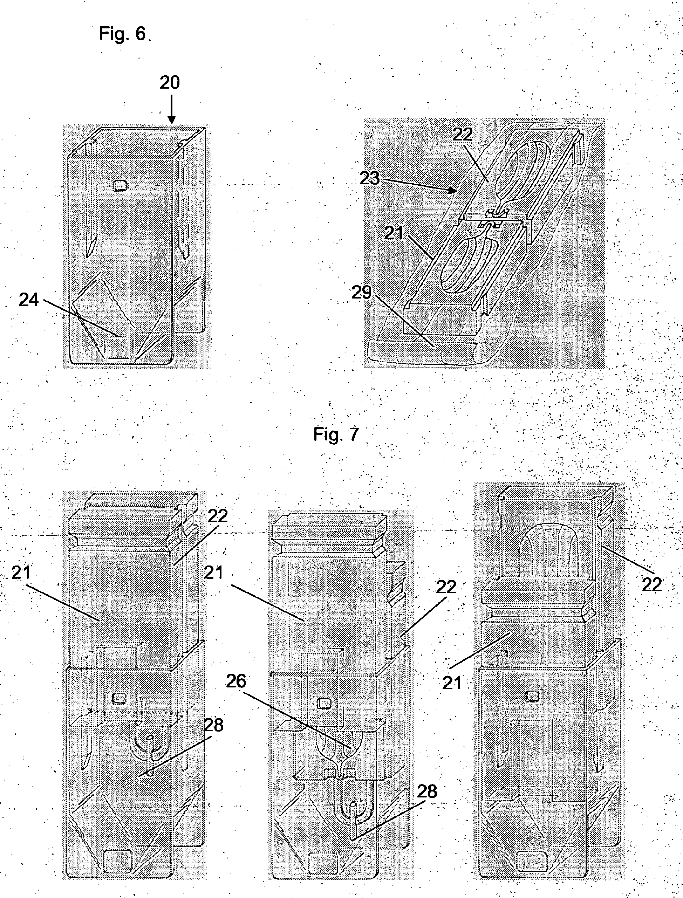

Figur 6 zeigt die Ansicht einer weiteren Ausführungsform eines erfindungsgemäßen analytischen Testsystems, welches eine Probenaufnahme- und dosiervorrichtung (23) gemäß Figur 3 und eine Reaktionsküvette (20) beinhaltet. Die Reaktionsküvette (20) ist im dargestellten Fall für die Erfassung einer für den Analyten charakteristischen Messgröße mittels optischer Methoden mit einer Detektionsvorrichtung (24) in Form eines transparenten Messfensters ausgestattet. Die Reaktionsküvette (20) kann wie dargestellt optional spezielle Führungs- oder Befestigungselemente wie Rillen oder Nuten aufweisen, welche das Zusammenfügen von Reaktionsküvette (20) und Probenaufnahme- und dosiervorrichtung (23) erleichtern und/oder definierte Bewegungsrichtungen der Teile zueinander vorgeben, wodurch sowohl Bedienungsfreundlichkeit und Bedienungssicherheit erhöht werden können.

Figur 7 zeigt die Ansichten eines erfindungsgemäßen analytischen Testsystems gemäß Figur 6 zu verschiedenen Verfahrensschritten bei der Durchführung einer Analytbestimmung.

Durch Zusammenführen der beiden Trägerteile (21) und (22) auf der Seite der gemeinsamen Folie kann eine Probenaufnahme und -dosiervorrichtung bereitgestellt werden, aus welcher nach unten das Dosierelement (28) herausragt. Da die beiden Trägerteile (21) und (22) durch die gemeinsame Folie flexibel miteinander verbunden sind, kann die Probenaufnahme und -dosiervorrichtung so in eine Form gebracht werden, in welcher sie zur Durchführung einer Analytbestimmung in die Reaktionsküvette eingeführt werden kann. Die Probenaufnahme und - dosiervorrichtung kann durch hier nicht dargestellte zusätzliche Befestigungselemente in diesem Zustand fixiert werden, beispielsweise durch Rastelemente auf einem oder beiden Trägerteilen oder durch Fixieren mittels wieder lösbarer Klebeverbindungen. Das Öffnen eines Flüssigkeitskompartiments (26) oder (27) kann beispielsweise dadurch erfolgen, dass die die beiden Trägerteile (21) und (22) gegeneinander verschoben werden, so dass die Folie zumindest im Bereich der Ausflusszunge eines Flüssigkeitskompartiments abgezogen wird und die darin enthaltene Flüssigkeit freigesetzt werden kann.

Zur Durchführung einer Analytbestimmung wird zunächst die zu untersuchende Probenflüssigkeit, beispielsweise eine Blutprobe, in das Dosierelement (28) der Probenaufnahme und -dosiervorrichtung aufgenommen. Anschließend werden Reaktionsküvette und Probenaufnahme und -dosiervorrichtung wie zuvor beschrieben zu einem analytischen Testsystem (30) zusammengeführt. In diesem Zustand, in welchem weder die Probenflüssigkeit noch die im den Flüssigkeitskompartimenten (26) und (27) enthaltene Flüssigkeit in die Reaktionsküvette eingebracht sind, kann nun eine erste optische Messung im Bereich der Detektionsvorrichtung, beispielsweise als Nullwertsbestimmung, durchgeführt werden. Durch Niederdrücken des zweiten Trägerteils (22) nach unten, wobei das erste Trägerteil (21) seine ursprüngliche Position beibehält, wird die im zweiten Flüssigkeitskompartiment (26) enthaltene Flüssigkeit, beispielsweise eine erste Reagenzienlösung, freigesetzt und fließt in die Reaktionsküvette. Das Öffnen des zweiten Flüssigkeitskompartiments (26) erfolgt durch die Abwärtsbewegung des zweiten Trägerteils (22), wodurch die gemeinsame Folie, welche am ersten Trägerteil (21) fixiert ist, im Bereich der Ausflusszunge des zweiten Flüssigkeitskompartiments (26) von diesem entfernt wird. Die darin enthalten erste Reagenzienlösung kommt nun einerseits mit der im Dosierelement (28) enthaltenen Probenflüssigkeit in Kontakt, wodurch diese zur Analytbestimmung in die Reaktionsküvette bereitgestellt, verdünnt und mit den in ersten Reagenzienlösung enthaltenen Substanzen zu einem Reaktionsansatz vermischt wird. In diesem Reaktionsansatz können nun eine oder auch mehrere Nachweisreaktionen einer mehrstufigen Analytbestimmung ablaufen. Bevorzugt wird der Reaktionsansatz weiterhin durchmischt, beispielsweise mittels eines in der Küvette befindlichen Magnetrührstäbchens, wodurch eine gute Durchmischung der Komponenten des Reaktionsansatzes gewährleistet werden kann. Zu diesem Zeitpunkt kann nun beispielsweise eine zweite optische Messung im Bereich der Detektionsvorrichtung, beispielsweise als Referenzwertsbestimmung, durchgeführt werden. In einem nachfolgenden Schritt kann durch Niederdrücken des ersten Trägerteils (21) nach unten, wobei das zweite Trägerteil (22) seine ursprüngliche Position beibehält oder wieder in diese zurückgebracht wird, die im ersten Flüssigkeitskompartiment enthaltene Flüssigkeit, beispielsweise eine zweite Reagenzienlösung, freigesetzt werden. Diese fließt in die Reaktionsküvette wodurch die darin enthaltenen Reagenzien dem Reaktionsansatz hinzugefügt werden. Dadurch können nun eine oder auch mehrere weitere Nachweisreaktionen einer mehrstufigen Analytbestimmung ablaufen, welche diese in der zweiten Reagenzienlösung enthaltenen Substanzen benötigen. Zu diesem Zeitpunkt kann nun beispielsweise eine dritte optische Messung im Bereich der Detektionsvorrichtung, beispielsweise als Messwertsbestimmung, durchgeführt werden. Aufgrund der Messwerte der optischen Messungen kann eine für den Analyten charakteristische Messgröße ermittelt werden, auf deren Basis unter Kenntnis weiterer Parameter wie beispielsweise Volumina der beteiligten Flüssigkeiten die Konzentration des Analyten in der Probenflüssigkeit bestimmt werden kann. Die Relativbewegung der beiden Trägerteile (21) und (22) zueinander kann bevorzugt durch instrumentelle Vorrichtungen durchgeführt werden, welche entsprechend angesteuert werden. Hierzu können die Trägerteile beispielsweise wir in Figur 7 dargestellt im oberen Bereich speziell ausgestaltet sein und beispielsweise Nuten besitzen, in welche eine instrumentelle Vorrichtung eingreifen und durch Anheben oder Niederdrücken eines oder beider Trägerteile die entsprechenden Verschiebungsbewegungen der Trägerteile zueinander verwirklichen kann.

## Patentansprüche

1. Probenaufnahme- und dosiervorrichtung (1,10), beinhaltend ein Dosierelement (8) und einen Träger (7,15), welcher zumindest ein Flüssigkeitskompartiment (14) enthält, das mit einem definierten Volumen einer Flüssigkeit befüllt ist,
**dadurch gekennzeichnet, dass**
das Dosierelement (8) in Form einer Kapillare mit zwei freien Enden ausgebildet ist, welche ein definiertes Volumen einer Probenflüssigkeit aufnehmen kann und integrierter Bestandteil des Trägers (7, 15) ist, und das Flüssigkeitskompartiment (14) durch eine abziehbare flüssigkeits- und gasdichte Folie verschlossen wird, so dass, das definierte Volume der Flüssigkeit, die im Flüssigkeitskompartiment (14) enthaltene ist , nach dem Öffnen dieses Flüssigkeitskompartiments (14) mit dem im Dosierelement (8) des Trägers (7,15) enthaltenen definierten Volumen der Probenflüssigkeit in Kontakt kommt und sich vermischt.

2. Probenaufnahme- und dosiervorrichtung gemäß Anspruch 1,
**dadurch gekennzeichnet, dass**
zumindest eine im Flüssigkeitskompartiment enthaltene Flüssigkeit eine Puffer- oder Verdünnungslösung oder eine Reagenzienlösung ist.

3. Probenaufnahme- und dosiervorrichtung gemäß Anspruch 1 oder 2,
**dadurch gekennzeichnet, dass**
mehrere voneinander getrennte Flüssigkeitskompartimente auf dem Träger enthalten sind, welche insbesondere gleichzeitig oder sequentiell öffenbar sind.

4. Analytisches Testsystem zur Bestimmung eines Analyten in einer Probenflüssigkeit, beinhaltend
eine Probenauffnahme- und dosiervorrichtung gemäß einem der Ansprüche 1 bis 3 und eine Reaktionsküvette.

5. Analytisches Testsystem gemäß Anspruch 4,
**dadurch gekennzeichnet, dass**
es weiterhin eine Mischvorrichtung enthält

6. Analytisches Testsystem gemäß einem der Ansprüche 4 oder 5,
**dadurch gekennzeichnet, dass**
die Reaktionsküvette Vorrichtungen enthält, welche eine Bestimmung des Analyten in der Reaktionsküvette ermöglichen.

7. Analytisches Testsystem gemäß einem der Ansprüche 4 bis 6,
**dadurch gekennzeichnet, dass**
die zur Bestimmung des Analyten benötigten spezifischen Reagenzienflüssigkeiten in einem oder mehreren Flüssigkeitskompartimenten auf dem Träger der Probenaufnahme- und dosiervorrichtung enthalten sind.

8. Analytisches Testsystem gemäß einem der Ansprüche 4 bis 6,
**dadurch gekennzeichnet, dass**
zur Bestimmung des Analyten benötigten spezifischen Reagenzien in der Reaktionsküvette, insbesondere in trockenchemischer Form, enthalten sind.

9. Verwendung eines analytischen Testsystems gemäß einem der Ansprüche 4 bis 8 zur Bestimmung eines Analyten in einer Probenflüssigkeit mittels sequentieller Nachweisreaktionen, insbesondere zur Bestimmung von Hämoglobin A1c in einer Blutprobe.

10. Verfahren zur Bestimmung eines Analyten in einer Probenflüssigkeit mit einem analytischen Testsystem gemäß einem der Ansprüche 4 bis 8,
beinhaltend die Schritte
a) Inkontaktbringen des Dosierelements mit der zu untersuchenden Probenflüssigkeit, so dass ein definiertes Volumens der Probenflüssigkeit im Dosierelement verbleibt,
b) Einbringen der Probenaufnahme- und dosiervorrichtung in die Reaktionsküvette
c) Öffnen zumindest eines Flüssigkeitskompartiments auf dem Träger, so dass die in diesem Flüssigkeitskompartiment enthaltene Flüssigkeit in die Reaktionsküvette fließt und dort in einer Weise mit der im Dosierelement enthaltenen Probenflüssigkeit in Kontakt kommt, dass die Probenflüssigkeit aus dem Dosierelement in die Reaktionsküvette transportiert und ein Reaktionsansatz gebildet wird,
d) optional Zusetzen weiterer für die Bestimmung des Analyten notwendiger Reagenzien und/oder Durchmischten des Reaktionsansatzes,
e) Bestimmen des Analyten anhand einer für den Analyten charakteristischen Messgröße, insbesondere mittels optischer Detektionsverfahren.

## Claims

1. Sampling and dosing device (1, 10), comprising a dosing element (8) and a support (7, 15) which contains at least one liquid compartment (14) filled with a defined volume of a liquid, **characterized in that** the dosing element (8) is designed in the form of a capillary with two free ends, which can take up a defined volume of a sample liquid, and is an integrated component part of the support (7, 15), and the liquid compartment (14) is closed by a liquid-tight and gas-tight peel-off film, such that, after this liquid compartment (14) has been opened, the defined volume of the liquid contained in the liquid compartment (14) comes into contact with and mixes with the defined volume of the sample liquid contained in the dosing element (8) of the support (7, 15).

2. Sampling and dosing device according to Claim 1, **characterized in that** at least one liquid contained in the liquid compartment is a buffer solution or diluent solution or a reagent solution.

3. Sampling and dosing device according to Claim 1 or 2, **characterized in that** several liquid compartments separate from one another are present on the support and in particular can be opened simultaneously or sequentially.

4. Analytical test system for determining an analyte in a sample liquid, comprising a sampling and dosing device according to one of Claims 1 to 3, and a reaction cuvette.

5. Analytical test system according to Claim 4, **characterized in that** it further contains a mixing device.

6. Analytical test system according to either of Claims 4 and 5, **characterized in that** the reaction cuvette contains devices that permit a determination of the analyte in the reaction cuvette.

7. Analytical test system according to one of Claims 4 to 6, **characterized in that** the specific reagent liquids required to determine the analyte are contained in one or more liquid compartments on the support of the sampling and dosing device.

8. Analytical test system according to one of Claims 4 to 6, **characterized in that** specific reagents required to determine the analyte are contained in the reaction cuvette, in particular in a dry chemical form.

9. Use of an analytical test system according to one of Claims 4 to 8 for determining an analyte in a sample liquid by means of sequential detection reactions, in particular for determining haemoglobin A1c in a blood sample.

10. Method for determining an analyte in a sample liquid using an analytical test system according to one of Claims 4 to 8,
said method comprising the steps of
a) bringing the dosing element into contact with the sample liquid to be tested, such that a defined volume of the sample liquid remains in the dosing element;
b) introducing the sampling and dosing device into the reaction cuvette;
c) opening at least one liquid compartment on the support, such that the liquid contained in this liquid compartment flows into the reaction cuvette and there comes into contact with the sample liquid contained in the dosing element, in such a way that the sample liquid from the dosing element is transported into the reaction cuvette and a reaction mixture is formed;
d) optionally adding further reagents required for the determination of the analyte and/or mixing the reaction mixture,
e) determining the analyte on the basis of a characteristic measurement parameter for the analyte, in particular by means of optical detection methods.

## Revendications

1. Dispositif de réception et de dosage d'échantillon (1, 10), comprenant un élément de dosage (8) et un support (7, 15) lequel comporte au moins un compartiment pour liquides (14) rempli avec un volume défini d'un liquide,
**caractérisé en ce que**
l'élément de dosage (8) est réalisé sous la forme d'un capillaire à deux extrémités libres, qui peut recevoir un volume défini d'un échantillon liquide et est partie intégrante du support (7, 15), et le compartiment pour liquides (14) est fermé par un film pelable étanche aux liquides et aux gaz, de telle sorte que le volume défini du liquide contenu dans le compartiment pour liquides (14), après l'ouverture de ce compartiment (14), vient en contact et se mélange avec le volume défini de l'échantillon liquide contenu dans l'élément de dosage (8) du support (7, 15).

2. Dispositif de réception et de dosage d'échantillon selon la revendication 1,
**caractérisé en ce que**
au moins un liquide contenu dans le compartiment pour liquides est une solution tampon ou de dilution ou une solution de réactifs.

3. Dispositif de réception et de dosage d'échantillon selon la revendication 1 ou 2,
**caractérisé en ce que**
plusieurs compartiments pour liquides séparés les uns des autres sont prévus sur le support, lesquels compartiments peuvent notamment s'ouvrir simultanément ou de manière séquentielle.

4. Système de test analytique pour la détermination d'un analyte dans un échantillon liquide, comprenant
un dispositif de réception et de dosage d'échantillon selon l'une des revendications 1 à 3 et une cuve de réaction.

5. Système de test analytique selon la revendication 4,
**caractérisé en ce que**
il comprend en outre un dispositif mélangeur.

6. Système de test analytique selon l'une des revendications 4 ou 5,
**caractérisé en ce que**
la cuve de réaction contient des dispositifs permettant une détermination de l'analyte dans la cuve de réaction.

7. Système de test analytique selon l'une des revendications 4 à 6,
**caractérisé en ce que**
les liquides réactifs spécifiques nécessaires pour la détermination de l'analyte sont contenus dans un ou plusieurs compartiments pour liquides sur le support du dispositif de réception et de dosage d'échantillon.

8. Système de test analytique selon l'une des revendications 4 à 6,
**caractérisé en ce que**
les réactifs spécifiques nécessaires pour la détermination de l'analyte sont contenus dans la cuve de réaction, en particulier sous une forme chimique sèche.

9. Utilisation d'un système de test analytique selon l'une des revendications 4 à 8 pour la détermination d'un analyte dans un échantillon liquide au moyen de réactions de détection séquentielles, en particulier pour la détermination de l'hémoglobine A1 c dans un échantillon de sang.

10. Procédé de détermination d'un analyte dans un échantillon liquide avec un système de test analytique selon l'une des revendications 4 à 8, comprenant les étapes suivantes :
a) mise en contact de l'élément de dosage avec l'échantillon liquide à analyser, de telle sorte qu'un volume défini de l'échantillon liquide reste dans l'élément de dosage,
b) mise en place du dispositif de réception et de dosage d'échantillon dans la cuve de réaction,
c) ouverture d'au moins un compartiment pour liquides sur le support, de manière à ce que le liquide contenu dans ce compartiment coule dans la cuve de réaction et vient en contact avec l'échantillon liquide contenu dans l'élément de dosage, de telle sorte que l'échantillon liquide est transporté hors de l'élément de dosage dans la cuve de réaction et qu'un milieu réactionnel se forme,
d) optionnellement ajout d'autres réactifs nécessaires pour la détermination de l'analyte et/ou mélange du milieu réactionnel,
e) détermination de l'analyte à l'aide d'une grandeur de mesure caractéristique de l'analyte, en particulier au moyen de procédés de détection optique.
